# EUROPEAN PATENT SPECIFICATION

(11) **EP 2 653 809 B1**
(45) Date of publication and mention of the grant of the patent: **18.04.2018**
(21) Application number: 13176556.2
(22) Date of filing: 25.04.2008
(51) Int. Cl.: F25D 23/00, A23B 4/06, A23L 3/36, A23L 3/3409, F25D 17/04

(54) **Refrigerator**
Kühlschrank
Réfrigérateur

(30) Priority: 26.04.2007 JP 2007116942; 26.04.2007 JP 2007116943; 26.04.2007 JP 2007116944; 26.04.2007 JP 2007116945; 26.04.2007 JP 2007116947; 06.11.2007 JP 2007288378; 07.11.2007 JP 2007289497; 07.11.2007 JP 2007289499; 07.12.2007 JP 2007316911; 31.03.2008 JP 2008091140; 31.03.2008 JP 2008091141; 31.03.2008 JP 2008091142
(43) Date of publication of application: 23.10.2013
(62) Divisional of application: 08751610.0
(73) Proprietor: Panasonic Corporation, Kadoma-shi Osaka 571-8501 (JP)
(72) Inventor: Ueda, Yoshihiro, Osaka 540-6207 (JP); Adachi, Tadashi, Osaka 540-6207 (JP); Nakanishi, Kazuya, Osaka 540-6207 (JP); Kamisako, Toyoshi, Osaka 540-6207 (JP); Tsujimoto, Kahoru, Osaka 540-6207 (JP); Kakita, Kenichi, Osaka 540-6207 (JP); Mamemoto, Toshiaki, Osaka 540-6207 (JP); Kanehara, Sachiko, Osaka 540-6207 (JP); Mori, Kiyoshi, Osaka 540-6207 (JP)
(74) Representative: Eisenführ Speiser

(56) References cited:
- WO-A1-2006/009189
- JP-A- 2007 046 892

## Description

### TECHNICAL FIELD

The present invention relates to a refrigerator with a storage compartment maintained to high humidity.

### BACKGROUND ART

Temperature, humidity, environmental gas, microbes, light, and the like are effectors of lowering in freshness of vegetables. The vegetables are living matters that carry out breathing and transpiration actions, where the breathing and transpiration action need to be suppressed to maintain freshness. Other than some vegetables such as vegetables that cause low temperature faults, the breathing of most vegetables is suppressed at low temperature, and transpiration is prevented by high humidity. In recent years, the home refrigerator includes a sealed vegetable-dedicated crisper, and is controlled such that the vegetables are cooled to an appropriate temperature and the interior of the refrigerator has high humidity to suppress the transpiration of the vegetables in an aim of preserving vegetables. A means for atomizing mist may be used as a means for having high humidity in the interior of the refrigerator.

Conventionally, the refrigerator having such mist spraying function generates and sprays mist by vibrating an absorbent material with an ultrasonic oscillator, and humidifies the interior of the vegetable compartment to suppress the transpiration of the vegetables.

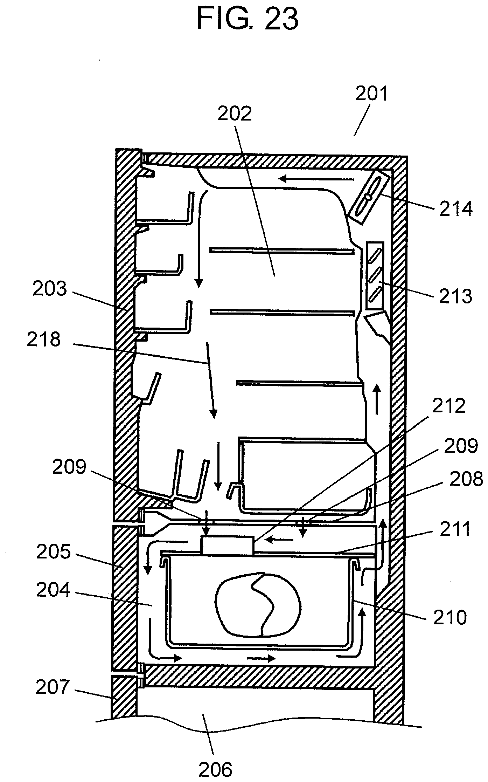

FIG. 23 shows a longitudinal cross-sectional view of a conventional refrigerator. As shown in FIG. 23, refrigerator body 201 includes refrigerator compartment 202, and an opening on the front surface thereof is closed with door 203. Vegetable compartment 204 is arranged on a lower side of refrigerator compartment 202, and an opening on the front surface thereof is closed with pull-out door 205. Freezer compartment 206 is arranged on a lower side of vegetable compartment 204, and an opening on the front surface thereof is closed with pull-out door 207. Refrigerator compartment 202 and vegetable compartment 204 are partitioned with partition board 208. Partition board 208 includes hole 209 for flowing in cool air from refrigerator compartment 202 to vegetable compartment 204. Vegetable crisper 210 is attached to pull-out door 205, and is pulled out with opening/closing of pull-out door 205. Vegetable crisper lid 211 is arranged at an upper part of vegetable crisper 210 to close vegetable crisper 210 when pull-out door 205 is closed. Here, vegetable crisper lid 211 is fixed on refrigerator body side. Vegetable crisper lid 211 includes ultrasonic humidifier 212 to transpire moisture inside vegetable crisper 210. Refrigerator compartment 202 includes evaporator 213 for refrigeration temperature zone compartment to circulate the cool air by the operation of fan 214, and cool refrigerator compartment 202 and vegetable compartment 204. Although not shown in the figure, the refrigerator also includes an evaporator for freezing temperature zone compartment to cool freezer compartment 206.

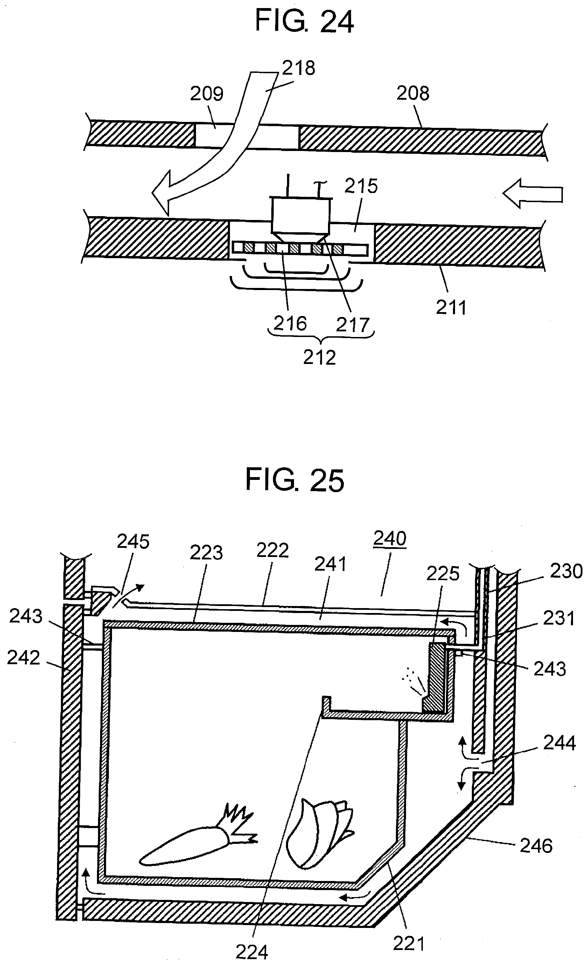

FIG. 24 is a cross-sectional view of the vicinity of conventional ultrasonic humidifier 212. As shown in FIG. 24, ultrasonic humidifier 212 is arranged in hole 215 of vegetable crisper lid 211, and is configured by water absorbent material 216 and ultrasonic oscillator 217.

The operation of the refrigerator configured as above will be described below. When the temperature of refrigerator compartment 202/vegetable compartment 204 becomes high, a cooling medium is flowed to evaporator 213, and fan 214 is driven. As shown with an arrow in FIG. 23, cooling air at the periphery of evaporator 213 then returns to evaporator 213 through refrigerator compartment 202, hole 209, and vegetable compartment 204. Refrigerator compartment 202 and vegetable compartment 204 are thereby cooled. This state is called a cooling mode.

When refrigerator compartment 202/vegetable compartment 204 is substantially cooled, the supply of the cooling medium to evaporator 213 is stopped. However, fan 214 continues to operate. Thus, refrigerator compartment 202 / vegetable compartment 204 are humidified by the melting of frost attached to evaporator 213. This state is called a humidifying mode. The humidifying mode is also referred to as "moisture drive". Fan 14 is stopped after continuing the humidifying mode for a predetermined time (for few minutes), which is the operation stopped mode. Thereafter, when the temperature of refrigerator compartment 202/vegetable compartment 204 becomes high, the state again becomes the cooling mode. The above modes are repeated.

Ultrasonic humidifier 212 will now be described. Water absorbent material 216 is made of water absorbing material such as silica gel, zeolite, activated carbon, and the like. Therefore, moisture in the flowing air is absorbed in the humidifying mode described above. Ultrasonic oscillator 217 is driven in the last half of the cooling mode. The moisture in water absorbent material 216 is thereby discharged to the outside. The interior of vegetable crisper 210 is thereby humidified. Ultrasonic oscillator 217 is driven in the last half of the cooling mode in an aim of preventing drying due to lowering in humidity of vegetable compartment 204.

In the conventional configuration, the upper surface of vegetable crisper 210 is closed by vegetable crisper lid 211, whereby the interior of vegetable crisper 210 is difficult to be directly humidified even if the cool air containing humidity is circulated through vegetable compartment 204 during the humidifying mode (during moisture drive). Furthermore, in the conventional configuration, moisture in air of refrigerator compartment 202 and moisture in space other than of vegetable crisper 210 of vegetable compartment 204 are used as a supply source of water to ultrasonic oscillator 217. Most of the moisture in space generates from the warm humidity that flows into the refrigerator by the opening/closing of the door, where the amount of moisture is small compared to the interior of vegetable crisper 210 storing vegetables with great amount of moisture, and thus sufficient humidification may not necessarily be carried out.

FIG. 25 shows a cross-sectional view of a vegetable compartment of another conventional refrigerator. As shown in FIG. 25, vegetable compartment 241 is arranged at a lower part of body case 246 of refrigerator body 240, and an opening on the front surface thereof is closed by pull-out door 242 that can be pulled out in a freely opening/closing manner. Vegetable compartment 241 is partitioned from refrigerator compartment (not shown) on the upper side thereof with partition board 222. Fixing hanger 243 is fixed to an inner surface of pull-out door 242, and vegetable crisper 221 for storing food such as vegetables is mounted on fixing hanger 243. An opening on upper surface of vegetable crisper 221 is sealed by lid 223. Thawing compartment 224 is arranged inside vegetable crisper 221, and ultrasonic spraying device 225 is arranged in thawing compartment 224.

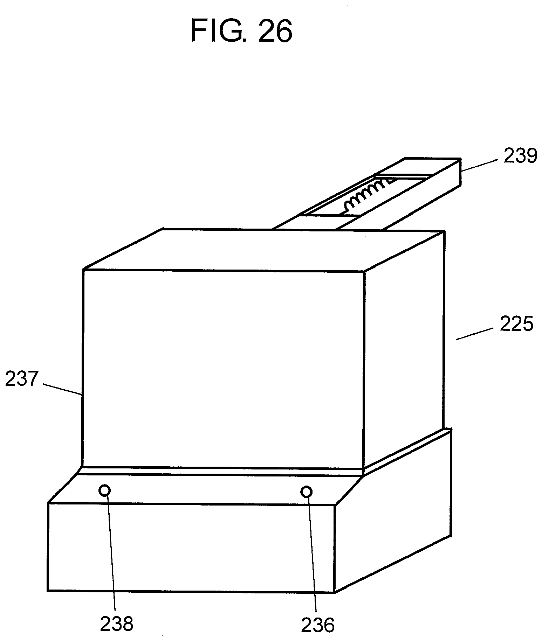

FIG. 26 shows a perspective view of ultrasonic spraying device 225. As shown in FIG. 26, ultrasonic spraying device 225 includes mist blowout port 236, water storage container 237, humidity sensor 238, and hose receiver 239. Water storage container 237 is connected to defrosted water hose 230 (see FIG. 25) by hose receiver 239. Purification filter 231 for cleaning the defrosted water is arranged at one part of defrosted water hose 230.

The operation of the refrigerator configured as above will now be described. The cooling air cooled by heat exchange evaporator (not shown) flows through the outer surface of vegetable crisper 221 and lid 223 to cool vegetable crisper 221 and to cool the food stored therein. The defrosted water that generates from the evaporator during the operation of the refrigerator is purified by purification filer 231 when passing through defrosted water hose 230, and supplied to water storage container 237 of ultrasonic spraying device 225.

When detected that the in-refrigerator humidity is lower than or equal to 90% by humidity sensor 238, ultrasonic spraying device 225 starts humidification to adjust the humidity to an appropriate humidity for maintaining the vegetables etc. in vegetable crisper 221 fresh. When detected that the in-refrigerator humidity is higher than or equal to 90% by humidity sensor 238, ultrasonic spraying device 225 stops excessive humidification. As a result, the interior of vegetable compartment 241 can be rapidly humidified by ultrasonic spraying device 225, the interior of vegetable compartment 241 can always be held at high humidity, transpiration action of vegetables etc. can be suppressed, and the freshness of vegetables etc. can be maintained.

However, in the conventional configuration described above, the sprayed water particles cannot be fined due to the system of spraying water with an ultrasonic vibration element, and thus the inside of the refrigerator cannot be evenly sprayed, and the attachment rate of the mist to the surface of food is low. Furthermore, if the spraying amount is increased or continuous spraying is performed to raise the attachment rate, vegetables etc. tend to cause water rot, or the inside of the refrigerator may build up condensation.

Moreover, in the conventional configuration described above, configuration of defrosted water hose and purification filter, or water supply path directly connected to the water line is required, and an anti-freezing heater etc. is required, of which configuration is complicating.

In addition, in the conventional configuration described above, the mist is sprayed in an aim of having high humidity at the interior of the refrigerator, but the spraying amount cannot be adjusted, whereby water hole may form in the refrigerator due to excessive spraying, and stored articles such as vegetables may cause water rot.
[Patent document 1] Unexamined Japanese Patent Publication No. 2004-125179
[Patent document 2] Unexamined Japanese Patent Publication No. 6-257933
[Patent document 3] Unexamined Japanese Patent Publication No. 2000-220949
A refrigerator according to the preamble of claim 1 is known from JP-A-2007-046892.

### DISCLOSURE OF THE INVENTION

In view of solving the problems of the prior art, the present invention provides a refrigerator capable of sufficiently carrying out humidification of an appropriate amount. The refrigerator of the present invention is defined in claim 1. It includes in particular a heat insulating partitioned storage compartment, a plurality of baskets arranged in the storage compartment, and a mist atomizer arranged in the storage compartment. The mist atomizer condenses moisture in air and atomizes to the storage compartment as mist. The mist atomizer is arranged near a gap between the baskets. According to such configuration, the humidity leaked out from the inside of the basket is efficiently collected, and again returned to the inside of the basket from the gap between the baskets by the mist atomizer. Thus, the refrigerator of the present invention sufficiently humidifies the interior of the basket and maintains freshness of the vegetables.

### BRIEF DESCRIPTION OF THE DRAWINGS

FIG. 1 is a front view of a refrigerator according to a first embodiment of the present invention;
FIG. 2 is a front view of a refrigerator according to a sixth embodiment of the present invention;
FIG. 3 is a front view of a refrigerator according to a fifth embodiment of the present invention;
FIG. 4 is a front view of the refrigerator according to the fifth embodiment of the present invention;
FIG. 5 is a front view of a refrigerator according to a third embodiment of the present invention;
FIG. 6 is a front view of the refrigerator according to a seventh embodiment of the present invention;
FIG. 7 is a front view of the refrigerator according to an eighth embodiment of the present invention;
FIG. 8 is a view showing a longitudinal cross-section of the refrigerator according to the first embodiment of the present invention;
FIG. 9 is a view showing a longitudinal cross-section of a refrigerator according to a second embodiment of the present invention;
FIG. 10 is a view showing a longitudinal cross-section of a refrigerator according to the third embodiment of the present invention;
FIG. 11 is a view showing a longitudinal cross-section of a refrigerator according to a fourth embodiment of the present invention;
FIG. 12 is a view showing a longitudinal cross-section of a refrigerator according to the fifth embodiment of the present invention;
FIG. 13 is a view showing a longitudinal cross-section of a refrigerator according to the sixth embodiment of the present invention;
FIG. 14 is a view showing a longitudinal cross-section of a refrigerator according to the seventh embodiment of the present invention;
FIG. 15 is a perspective view of a vegetable compartment according to the fifth embodiment of the present invention;
FIG. 16 is a perspective view of a vegetable compartment according to the sixth embodiment of the present invention;
FIG. 17 is a perspective view of a vegetable compartment according to the seventh embodiment of the present invention;
FIG. 18 is a perspective view of a vegetable compartment according to the eighth embodiment of the present invention;
Fig. 19 is a front view of a vegetable compartment according to a ninth embodiment of the present invention;
FIG. 20 is a detailed cross-sectional view of the vicinity of a mist atomizer according to the ninth embodiment of the present invention;
FIG. 21 is an operation flowchart of the mist atomizer according to the ninth embodiment of the present invention;
FIG. 22 is a cross-sectional view of the vicinity of the vegetable compartment according to a tenth embodiment of the present invention;
FIG. 23 is a view showing a longitudinal cross-section of a conventional refrigerator.
FIG. 24 is a structure diagram of an ultrasonic humidifier of the conventional refrigerator.
FIG. 25 is a view showing a longitudinal cross-sectional of a conventional vegetable compartment.
FIG. 26 is a perspective view of a conventional ultrasonic spraying device.

### REFERENCE MARKS IN THE DRAWINGS

- 21: refrigerator compartment
- 22: switchable temperature compartment
- 23: icemaker
- 24: vegetable compartment
- 25: freezer compartment
- 28: cooling compartment
- 45: outlet for vegetable compartment
- 46: inlet for vegetable compartment
- 64: lower basket
- 65: upper basket
- 66: lid
- 67: mist atomizer
- 68: wind direction rib
- 69: recess
- 168: wind direction auxiliary rib

### PREFERRED EMBODIMENTS FOR CARRYING OUT OF THE INVENTION

### (First embodiment)

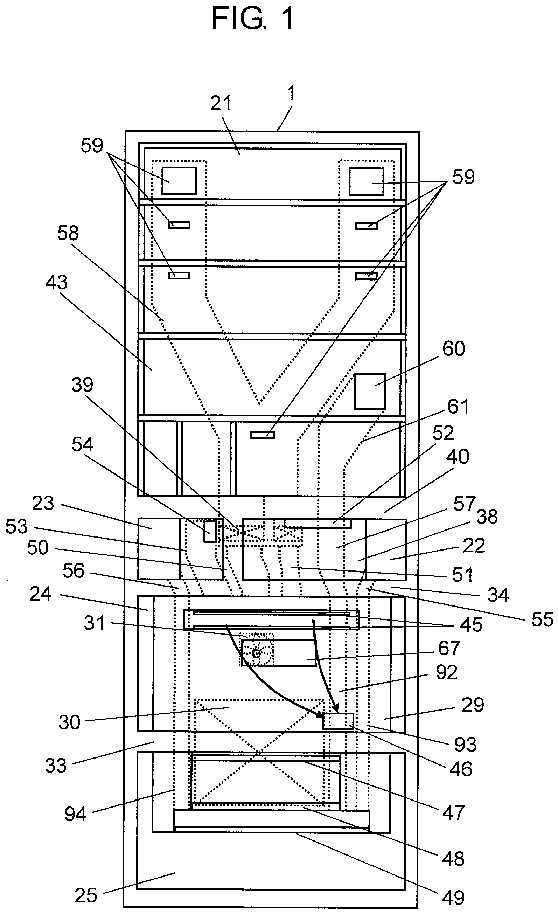

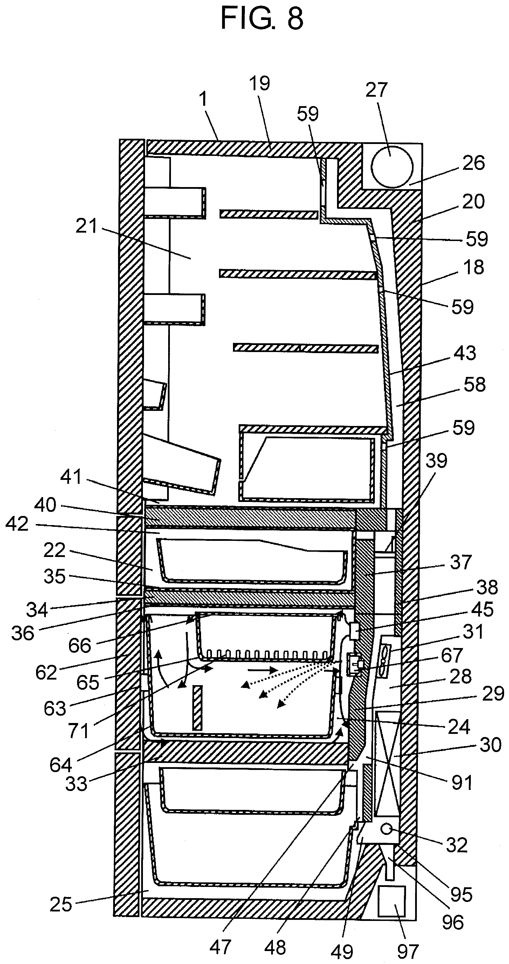

FIG. 1 is a front view of a refrigerator according to a first embodiment of the present invention, and is a view of a state in which the door is detached. FIG. 8 is a longitudinal cross-sectional view of the refrigerator according to the first embodiment. In FIG. 1 and FIG. 8, refrigerator body 1 is configured by shell 18 and inner wall 19, interiorly filled with foam heat insulator 20 such as hard foam urethane and heat insulated from the periphery and partitioned to a plurality of storage compartments. Refrigerator compartment 21 serving as a first storage compartment is arranged at the uppermost level, switchable temperature compartment 22 serving as a fourth storage compartment and icemaker 23 serving as a fifth storage compartment are arranged side by side at a lower part of refrigerator compartment 21, vegetable compartment 24 serving as a second storage compartment is arranged at a lower part of switchable temperature compartment 22 and icemaker 23, and freezer compartment 25 serving as a third storage compartment is arranged at the lowermost level.

Refrigerator compartment 21 is normally between 1°C and 5°C with a temperature that does not freeze as a lower limit for refrigeration. Vegetable compartment 24 often has a temperature setting of between 2°C and 7°C, which is the same as or slightly higher than refrigerator compartment 21. The freshness of leaf vegetables can be maintained for a long period of time the lower the temperature. Freezer compartment 25 is set to a freezing temperature zone, and is normally set to between -22°C and -15°C for frozen storage, but may be set to a low temperature of between -30°C and -25°C to enhance the frozen storage state.

Switchable temperature compartment 22 can switch to a temperature zone set in advance between the refrigeration temperature zone and freezing temperature zone other than the temperature zone for refrigeration set between 1°C and 5°C, vegetables set between 2°C and 7°C , and freezing normally set to between -22°C and -15°C. For instance, the temperature between the refrigerator and the freezer of soft freezer (about between -12°C and -6°C), partial freezing (about between -5°C and -1°C), chilled (about between -1°C and 1°C), etc. Switchable temperature compartment 22 is a storage compartment including an independent door provided next to icemaker 23, and often has a pull-out type door.

In the present embodiment, switchable temperature compartment 22 is a storage compartment having the temperature zone of refrigeration and freezing, but may be a storage compartment specialized for switching only to the temperature zone between refrigeration and freezing, with refrigeration entrusted to refrigerator compartment 21 and vegetable compartment 24, and freezing entrusted to freezer compartment 25.

Icemaker 23 is a space for making ice with an automatic ice machine (not shown) provided at an upper part of the compartment with water fed from a water storage tank (not shown) in refrigerator compartment 21, and storing the same in ice storage container (not shown) arranged at the lower part of the compartment, and is a storage compartment with an independent door with a small opening provided next to switchable temperature compartment 22, and often includes a pull-out type door.

A roof surface portion of refrigerator body 1 has a shape provided with a step-wise recess towards the rear surface direction of the refrigerator, where machine compartment 26 is formed in the step-wise recess to accommodate configuring components on the high pressure side of the freezing cycle such as compressor 27, and drier (not shown) for removing moisture. In other words, machine compartment 26 arranged with compressor 27 is formed into a back region at the uppermost part in refrigerator compartment 21. As machine compartment 26 is provided and compressor 27 is arranged in the back region of the storage compartment at the uppermost part of refrigerator body 1, which is a dead space the hand is difficult to reach, the space of the machine compartment that was at the lowermost part of refrigerator body 1, which is easy to use for the user, in the conventional refrigerator can be effectively transformed to a storage compartment capacity, thereby greatly improving the accommodating performance and the usability.

The matters related to the main parts of the invention described below in the present embodiment may be applied to a refrigerator of a type in which the machine compartment is provided in the back region of a storage compartment at the lowermost part of refrigerator body 1, which was typical in the prior art, and compressor 27 is arranged therein.

Cooling compartment 28 is arranged on a rear surface of vegetable compartment 24 and freezer compartment 25, where cooling compartment 28 is partitioned from vegetable compartment 24 and freezer compartment 25 by first cooling duct 29 having a heat insulating property. Evaporator 30 of fin-and-tube type is arranged, as a representative, in cooling compartment 28. Cooling fan 31 for blowing the cool air cooled by evaporator 30 towards refrigerator compartment 21, switchable temperature compartment 22, icemaker 23, vegetable compartment 24, and freezer compartment 25 through the forced convection method is arranged in an upper space of evaporator 30. Radiant heater 32 made of glass tube serving as a device for defrosting the frost attached to evaporator 30 and cooling fan 31 in time of cooling is arranged in a lower space of evaporator 30.

A seal material such as soft foam is attached to an outer periphery of first cooling duct 29 so that cool air and water does not leak out. First partition 33 for partitioning freezer compartment 25 and vegetable compartment 24 is molded with a heat insulator such as foam polystyrene and is detachable.

Second partition 34 for partitioning switchable temperature compartment 22, icemaker 23, and vegetable compartment 24 has an outer shell configured by second upper partition board 35 having a substantially L-shape in side cross-sectional view and second lower partition board 36 of flat-plate shape, and the interior of second partition 34 is foam filled with foam heat insulator 20 such as hard foam urethane. In this case, switchable temperature compartment 22 and icemaker 23 adjusted to a temperature lower than vegetable compartment 24 are arranged above vegetable compartment 24, where vegetable compartment 24 is indirectly cooled from above and second lower partition board 36 functions as a cooling board.

Second cooling duct 38 molded with heat insulator 37 such as foam polystyrene and formed with an air duct blown with the cool air for cooling refrigerator compartment 21, switchable temperature compartment 22, and icemaker 23 is arranged at a rear surface of second upper partition board 35 of substantially L-shape. Twin damper 39 serving as a damper device for adjusting the flow of cool air of refrigerator compartment 21 and switchable temperature compartment 22 is arranged inside, where the accommodation space can be miniaturized and the cost can be reduced by having the damper device for adjusting respectively the flow of the cool air of refrigerator compartment 21 and switchable temperature compartment 22 as a twin damper.

Third partition 40 for partitioning refrigerator compartment 21 and switchable temperature compartment 22, and icemaker 23 has an outer shell configured by third upper partition board 41 and third lower partition board 42, and the interior of third partition 40 is foam filled with foam heat insulator 20 such as hard foam urethane. Third cooling duct 43 for blowing the cool air into refrigerator compartment 21 is attached to the rear surface of refrigerator compartment 21, and a seal material is attached to a joining surface of third cooling duct 43 and second cooling duct 38 so that the cool air and the water do not leak out. First cooling duct 29, first partition 33, and third cooling duct 43 are detachable, but second partition 34, second cooling duct 38, and third partition 40 are not detachable as they are attached before the urethane foam of refrigerator body 1 and are strongly joined to refrigerator body 1 by foam heat insulator 20.

Air duct 91 for blowing the cool air for cooling refrigerator compartment 21, switchable temperature compartment 22, icemaker 23, and freezer compartment 25 is arranged inside first cooing duct 29. Furthermore, feedback air duct for refrigerator compartment 92 for returning the cool air from refrigerator compartment 21 to evaporator 30, feedback air duct for switchable temperature compartment 93 for retuning the cool air from switchable compartment 22 to evaporator 30, and feedback air duct for icemaker 94 for returning the cool air from icemaker 23 to evaporator 30 are arranged. At an upper part of first cooling duct 29, vegetable compartment outlet 45 for introducing some of the cool air flowing through feedback air duct for refrigerator compartment 92 into vegetable compartment 24 is arranged. Vegetable compartment outlet 45 is configured as a cooling means for cooling the basket. Inlet for vegetable compartment 46 for returning the cool air from vegetable compartment 24 again to feedback air duct for refrigerator compartment 92 is arranged at a position corresponding to a lower part of vegetable compartment 24 of first cooling duct 29. First outlet for freezer compartment 47 and second outlet for freezer compartment 48 for flowing the cool air from air duct 91 into freezer compartment 25 are formed at sites corresponding to freezer compartment 25 of first cooling duct 29. Inlet for freezer compartment 49 for returning the cool air from freezer compartment 25 to evaporator 30 is arranged at a lower part of first cooling duct 29.

Second cooling duct 38 includes air duct for refrigerator compartment 50 for blowing the cool air towards refrigerator compartment 21 through twin damper 39, air duct for switchable temperature compartment 51 for blowing the cool air towards switchable temperature 22 through same twin damper 39, and outlet for switchable temperature compartment 52 for discharging the cool air into switchable temperature compartment 22. Air duct for icemaker 53, directly connected from air duct 91, for blowing the cool air towards icemaker 23, and outlet for icemaker 54 for discharging the cool air into icemaker 23 are also arranged. Feedback air duct for switchable temperature compartment 55 for returning the cool air from switchable temperature compartment 22 to evaporator 30, feedback air duct for icemaker 56 for returning the cool air from icemaker 23 to evaporator 30, and feedback air duct for refrigerator compartment 57 for returning the cool air from refrigerator compartment 21 to evaporator 30 are also arranged.

Third cooling duct 43 includes air duct for refrigerator compartment 58 for guiding the cool air into refrigerator compartment 21, and a plurality of outlets for refrigerator compartment 59 for discharging the cool air from air duct for refrigerator compartment 58 to refrigerator compartment 21. Inlet for refrigerator compartment 60 and feedback air duct for refrigerator compartment 61 for returning the cool air from refrigerator compartment 21 to evaporator 30 are arranged at a lower part of third cooling duct 43.

Vegetable compartment 24 is closed by door 62 capable of to open an opening on a front surface so that outside air does not flow in. Door 62 includes pair of left and right plate-shaped slide rails 63 extending in vegetable compartment 24, and lower basket 64 is mounted thereon. Door 62 is pulled out horizontally along a movable direction of slide rail 63 to be opened and closed, and lower basket 64 is also operated and pulled out therewith. Upper basket 65 is mounted on lower basket 64, and moves at the same time as lower basket 64. In this case, the area of the bottom surface of upper basket 65 is smaller than the area of the bottom surface of lower basket 64. In the present embodiment, upper basket 65 and lower basket 64 are arranged with a space in a front and back direction, so that relatively high food such as PET bottles and long vegetables including Chinese leaves can be accommodated. Lid 66 is arranged in vegetable compartment 24, where an opened portion of the upper surface of upper basket 65 is closed when door 62 is closed. Furthermore, lid 66 remains in vegetable compartment 24 when door 62 is opened, and will not be pulled out.

Mist atomizer 67 is arranged at one part of first cooling duct 29, and is positioned near a gap between lower basket 64 and upper basket 65. A plurality of air flow-holes 71 is formed at one part of upper basket 65.

The operation and the effects on the refrigerator configured as above will now be described. First, the operation of the freezing cycle will be described. The freezing cycle operates and the cooling operation is carried out by a signal from a control substrate (not shown) according to the set temperature of the refrigerator. The cooling medium of high temperature and high pressure discharged by the operation of compressor 27 radiates heat and condenses and liquefies in a condenser (not shown), and reaches a capillary tube (not shown). Thereafter, in the capillary tube, it is depressurized while heat exchanging with the suction tube (not shown) to compressor 27 to thereby become a liquid cooling medium of low temperature and low pressure and reaches evaporator 30. According to the operation of cooling fan 31, heat exchange is carried out with the air in each storage compartment, and the cooling medium in evaporator 30 is evaporated and vaporized, and the cool air of low temperature performs a predetermined cooling of each compartment by being supply controlled with a damper and the like. The cooling medium from evaporator 30 passes through the suction tube and is taken in by compressor 27.

Through the heat exchange with the air in each storage compartment, moisture attaches becomes frost in evaporator 30 when heat exchanged with the air in each storage compartment. A signal is periodically output from the control substrate (not shown), thereby stopping compressor 27, carrying current to radiant heater 32, and defrosting evaporator 30.

The flow of the cool air in refrigerator body 1 will now be described. The cool air blown from cooling fan 31 is blown in an allocated manner at the lower side and the upper side through air duct 91. The cool air allocated to the lower side passes through first outlet for freezer compartment 47 and second outlet for freezer compartment 48 to be discharged into freezer compartment 25, heat exchanges with the air in freezer compartment 25, and passes through inlet for freezer compartment 49 to return to cooling compartment 28.

Of the cool air blown from cooling fan 31, the cool air allocated to the upper side passes from outlet for refrigerator compartment 59 to refrigerator compartment 21 through air duct for refrigerator compartment 50 and the refrigerator compartment side of twin damper 39. Part of such cool air passes from outlet for switchable temperature compartment 52 to switchable temperature compartment 22 through air duct for switchable temperature compartment 51 and the switchable temperature compartment side of twin damper 39. Here, the signal is output from the control substrate (not shown) to operate twin damper 39, control the flow of the cool air, perform the temperature control of refrigerator compartment 21 and switchable temperature compartment 22, and adjust the in-refrigeration temperature to a predetermined temperature.

The cool air blown into refrigerator compartment 21 is heat exchanged with the air in refrigerator compartment 21, taken in from inlet for refrigerator compartment 60, and returned to cooling compartment 28 through feedback air duct for refrigerator compartment 61, feedback air duct for refrigerator compartment 57, and feedback air duct for refrigerator compartment 92. Part of the returned cool air of refrigerator compartment 21 flows into vegetable compartment 24 by outlet for vegetable compartment 45 arranged in the middle of feedback air duct for refrigerator compartment 92, passes between lid 66 and second partition 34, and enters lower basket 64 from the front portion of upper basket 65. The cool air that once entered lower basket 64 again passes the lower part of lower basket 64 from the front portion of lower basket 64, is taken in from inlet for vegetable compartment 46, and converges to feedback air duct for refrigerator compartment 92. As apparent from the series of operations, vegetable compartment 24 is cooled by using the returned cool air of refrigerator compartment 21.

The cool air blown to switchable temperature compartment 22 is heat exchanged with the air in switchable temperature compartment 22, and returned to cooling compartment 28 through feedback air duct for switchable temperature compartment 55.

Lid 66 closes the opening on the upper side of upper basket 65 to prevent the cool air from directly contacting and drying the stored food. Generally, beverages such as PET bottles are often placed in the space in the front and back direction of lower basket 64 and upper basket 65, where the cool air directly touches such portion and the cooling speed is ensured.

The moisture evaporates from the food stored inside lower basket 64 with elapse of time from when placed inside. The air containing transpired moisture flows out to the outside of the basket from a gap of lower basket 64 and the rear surface of upper basket 65, and reaches mist atomizer 67 arranged nearby along the flow of part of the cool air discharged from outlet for vegetable compartment 45 and flowed into lower basket 64 through the upper space of lid 66. The interior of mist atomizer 67 is cooled to be lower than the ambient temperature by air duct 91, where the moisture in the air condenses inside mist atomizer 67. The condensed water is atomized in a mist-form from the gap of lower basket 64 and upper basket 65 to the interior of the basket. The transpired water from the stored food is again returned to the stored food itself by mist atomizer 67.

With the arrangement of mist atomizer 67 near the gap of lower basket 64 and upper basket 65, the cool air of high humidity in the basket can be collected and changed to a fine microscopic mist of high diffusivity, and atomized into the basket from the vicinity of the gap of lower basket 64 and upper basket 65. The basket thus can be filled with fine mist having high diffusivity and high freshness maintaining effect of vegetables.

Vegetable compartment 24 includes mist atomizer 67, where the cool air flows in from outside of vegetable compartment 24 through outlet for vegetable compartment 45, which is a cool air outlet, and the cool air flows out to the outside of vegetable compartment 24 through inlet for vegetable compartment 46, which is a cool air inlet. Thus, a cool air flow path in which the cool air mainly flows on the outer side of the basket arranged in vegetable compartment 24 and flows out to the outside of vegetable compartment 24 through inlet for vegetable compartment 46 after flowed in from inlet for vegetable compartment 46 is formed in vegetable compartment 24, and mist atomizer 67 is arranged on such cool air flow path.

Furthermore, in the present embodiment, outlet for vegetable compartment 45, which is the cool air outlet, is arranged on the upper side than mist atomizer 67 in the storage compartment including mist atomizer 67. Inlet for vegetable compartment 46, which is the cool air inlet, is arranged on the lower side than mist atomizer 67, and is arranged at a position such that the distance in the up and down direction of outlet for vegetable compartment 45 and mist atomizer 67 is shorter than between inlet for vegetable compartment 46 and mist atomizer 67. In other words, mist atomizer 67 is arranged on the upper side close to outlet for vegetable compartment 45 in the up and down direction.

Thus, in vegetable compartment 24, mist atomizer 67 is arranged between outlet for vegetable compartment 45 and inlet for vegetable compartment 46 in the up and down direction. The cool air flows in through outlet for vegetable compartment 45, which is the cool air outlet, from outside vegetable compartment 24, and the cool air flows out to the outside of vegetable compartment 24 through inlet for vegetable compartment 46, which is the cool air inlet. Thus, a cool air flow path in which the cool air mainly flows the outer side of the basket arranged in vegetable compartment 24 and flows out to the outside of vegetable compartment 24 through inlet for vegetable compartment 46 after flowed in from inlet for vegetable compartment 46 is formed in vegetable compartment 24, and mist atomizer 67 is arranged on such cool air flow path.

The amount of cool air flowing through the cool air flow path in which the cool air flowed in from outlet for vegetable compartment 45 into the storage compartment flows to the outside of vegetable compartment 24 through inlet for vegetable compartment 46 is large. Thus, the flow speed of the cool air becomes relatively fast and the cool air in the basket is pulled so that the cool air of high humidity leaks out to the cool air flow path, whereby the humidity flowed out from the basket can be efficiently collected and condensed in mist atomizer 67. Therefore, the condensed water can be changed to a microscopic mist, and the microscopic mist of high diffusivity can be again returned into the basket, whereby the interior of the basket can be sufficiently humidified with the microscopic mist and the freshness of vegetables can be maintained.

In the present embodiment, outlet for vegetable compartment 45, which is the cool air outlet, is arranged on the upper side than mist atomizer 67 in vegetable compartment 24 including mist atomizer 67. Inlet for vegetable compartment 46, which is the cool air inlet, is arranged on the lower side than mist atomizer 67, and is arranged at a position the distance in the up and down direction of outlet for vegetable compartment 45 and mist atomizer 67 is shorter than between inlet for vegetable compartment 46 and mist atomizer 67. In other words, mist atomizer 67 is arranged on the upper side close to outlet for vegetable compartment 45 in the up and down direction.

The microscopic mist generated in mist atomizer 67 can flow on the flow of a great amount of cool air that flowed in from outlet for vegetable compartment 45 by arranging mist atomizer 67 on the side close to outlet for vegetable compartment 45, which is the cool air outlet, in the up and down direction. The interior of the basket can be sufficiently humidified and the freshness of the vegetables can be maintained by containing greater amount of microscopic mist in the cool air flowing through vegetable compartment 24. Mist atomizer 67 is arranged on the path in the up and down direction on the rear wall side of vegetable compartment 24 where the flow is the largest in the cool air flow path in which the cool air mainly flows on the outer side of the basket arranged in the vegetable compartment 24 and to the outside of vegetable compartment 24 through inlet for vegetable compartment 46 after flowed in from inlet for vegetable compartment 46. Thus, the microscopic mist generated by mist atomizer 67 can flow on the flow of a great amount of cool air that flowed in from outlet for vegetable compartment 45, and the interior of the basket can be sufficiently humidified and the freshness of the vegetables can be maintained by containing greater amount of microscopic mist in the cool air flowing through vegetable compartment 24.

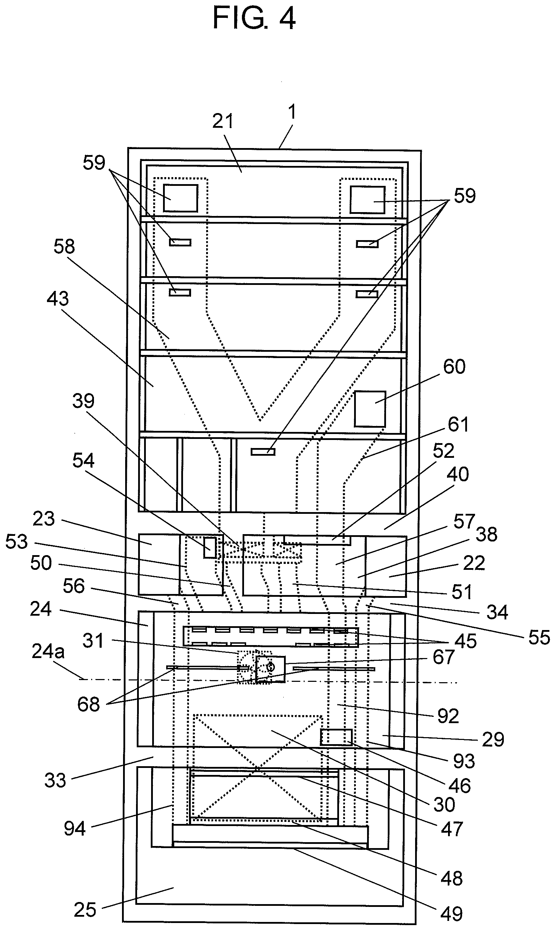

In vegetable compartment 24 including mist atomizer 67, mist atomizer 67 is arranged on center line 24a (see corresponding portion of Fig. 4) in the up and down direction of vegetable compartment 24 or on the upper side than center line 24a in the up and down direction.

The microscopic mist generated in mist atomizer 67 from the upper side can flow on the flow of the cool air flowing through vegetable compartment 24 by applying the characteristic that the cold air flows towards the lower side. Therefore, the interior of the basket can be sufficiently humidified and the freshness of the vegetables can be maintained by containing greater amount of microscopic mist in the cool air flowing through vegetable compartment 24. The gap of mist atomizer 67, lower basket 64, and upper basket 65 is not limited to that shown in Fig. 8 in the up and down positional relationship, and may be slightly shifted. If part of mist atomizer 67 is approximately the same height as the gap of lower basket 64 and upper basket 65, the air containing the transpired water from the stored food that flowed out to the outside of the basket from the gap of lower basket 64 and the rear surface of upper basket 65 flows on the lower side along the flow of the cool air at the rear surface of the basket. Since mist atomizer 67 is arranged in the cool air flow path, the transpired water can be efficiently collected.

Part of the cool air discharged from outlet for vegetable compartment 45 passes through the rear surface of lower basket 64 and upper basket 65 and is taken in from inlet for vegetable compartment 46. The air containing the transpired water from the stored food that flowed out to the outside of the basket from the gap of lower basket 64 and the rear surface of upper basket 65 flows towards the lower side along the flow of the cool air at the rear surface of the basket, and the transpired water can be efficiently collected since mist atomizer 67 is arranged in the cool air flow path.

The gap of mist atomizer 67, lower basket 64, and upper basket 65 is not limited to that shown in Fig. 8 in the up and down positional relationship, and may be slightly shifted. Substantially the same effects can be obtained as long as part of mist atomizer 67 is substantially the same height as the gap of lower basket 64 and upper basket 65.

The amount of wind of the cool air that flows out to the outside of the basket is a small amount, and does not inhibit mist atomization. The moisture of an extent necessary for mist atomization can be supplied to mist atomizer 67. Furthermore, the cool air that flows out to the outside of the basket is suppressed to a very small amount to an extent of not lowering the freshness of food in lower basket 64.

In this case, the mist particles to be atomized are about 0.005 µm to 20 µm, and are very microscopic. Mist atomizer 67 may atomize by converting water to fine particles by ultrasonic wave, may atomize with an electrostatic atomizing method, or may atomize with a pump method.

The cycle of transpiration of moisture from food - condensation - mist atomization is thus repeated, where according to the present embodiment, the food in which the cooling speed is to be given attention such as PET bottle is directly cooled with the discharged cool air, and the freshness of food in which curling is to be given attention such as leaf vegetables is maintained by mist atomization.

In this case, although not shown, the side wall of the interior of vegetable compartment 24 is appropriately heated with a heater etc., so that the mist particles diffused to the outside of the basket and the transpired water from the vegetables do not condense. Air flow-hole 71 of upper basket 65 functions to prevent excessive condensation in upper basket 65.

Mist atomizer 67 can be locally cooled by setting the attachment of mist atomizer 67 of the first cooling duct to a thinner wall thickness than the periphery thereof.

Second lower partition board 36 functions as the cooling board and cools the interior of the basket. Since second lower partition board 36 is configured larger than upper basket 65 and an obstacle does not exist in between the storage section of PET bottles and the like, beverages such as PET bottles can be cooled relatively fast.

Therefore, in the present embodiment, the humidity leaked out from the gap of upper basket 65 and lower basket 64 is efficiently collected and again returned to the interior of the basket by mist atomizer 67 by arranging mist atomizer 67 in the vicinity of the gap of upper basket 65 and lower basket 64 in the basket. The interior of the basket is thus sufficiently humidified and the freshness of the vegetables can be maintained.

In the present embodiment, since mist atomizer 67 is arranged in the cooling duct provided in the storage compartment, the humidity can be condensed and collected by cooling mist atomizer 67 with a low temperature portion of the cooling duct.

By arranging mist atomizer 67 in one of the cool air flow paths between the cool air outlet and the cool air inlet, the humidity in the storage compartment can be efficiently collected, and then returned again to the basket by mist atomizer 67, whereby the interior of the basket can be sufficiently humidified and the freshness of the vegetables can be maintained.

In the present embodiment, mist atomizer 67 is arranged between the cool air outlet and the cool air inlet in the cooling duct arranged in the storage compartment and including the cool air outlet and the cool air inlet. The humidity flowing between the cool air outlet and the cool air inlet can be efficiently condensed and collected by cooling mist atomizer 67 to a temperature lower than the interior of the storage compartment with the cooling duct.

In the present embodiment, the humidity is more reliably condensed and collected by arranging part of the mist atomizer at the same height as the gap of the upper basket and the lower basket.

In the present embodiment, an ultrasonic wave method is used for the mist spray device, and a microscopic mist having the particle diameter of a few µm can be generated. Since a great amount of atomization can be responded, the interior of the basket can be more sufficiently humidified with the microscopic mist, and the freshness of the vegetables can be maintained.

In the present embodiment the electrostatic atomization method may be used for the mist atomizer, and the microscopic mist having a particle diameter of a few nm to a few µm can be generated. As the atomized mist have a negative charge, the attachment rate to vegetables and the like can be enhanced, and the freshness of the vegetables can be maintained.

### (Second embodiment)

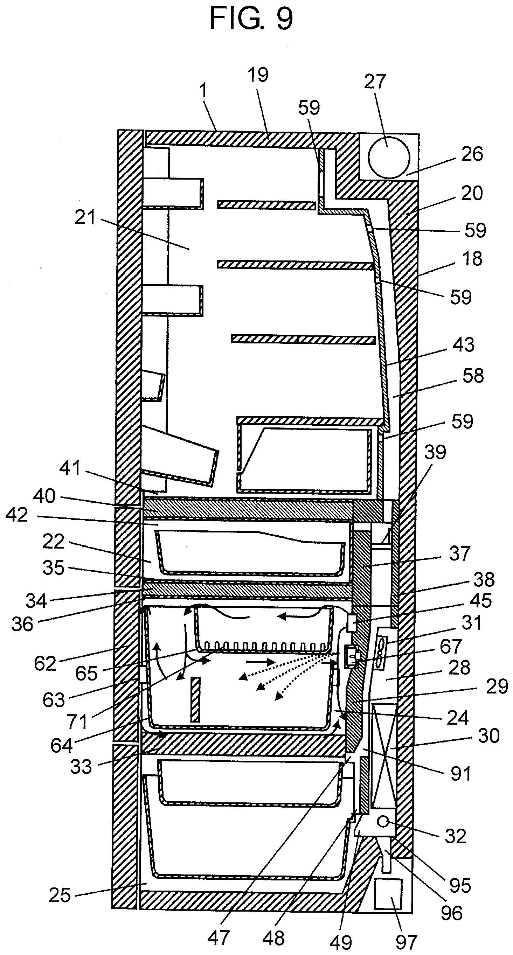

FIG. 9 is a longitudinal cross-sectional view of a refrigerator according to a second embodiment of the present invention. In FIG. 9, the basic configuration is similar to FIG. 1 and FIG. 8 described in the first embodiment. The same components are denoted with the same reference numbers. In the present embodiment, upper basket 65 of vegetable compartment 24 does not have lid 66.

The operation and the effects of the refrigerator configured as above will be described below. The cool air blown into refrigerator compartment 21, exchanges heat with the air in refrigerator compartment 21, is taken in from inlet for refrigerator compartment 60, and returned to cooling compartment 28 through feedback air duct for refrigerator compartment 61, feedback air duct for refrigerator compartment 57, and feedback air duct for refrigerator compartment 92. Part of the returned cool air of refrigerator compartment 21 flows into vegetable compartment 24 by outlet for vegetable compartment 45 arranged in the middle of feedback air duct for refrigerator compartment 92, flows through the upper part of upper basket 65, and enters lower basket 64 from the front portion of upper basket 65. The cool air that once entered lower basket 64 again passes the lower part of lower basket 64 from the front portion of lower basket 64, is taken in from inlet for vegetable compartment 46, and converges to feedback air duct for refrigerator compartment 92. As apparent from the series of operations, vegetable compartment 24 is cooled by using the returned cool air of refrigerator compartment 21.

The cool air blown to switchable temperature compartment 22 is heat exchanged with the air in switchable temperature compartment 22, and returned to cooling compartment 28 through feedback air duct for switchable temperature compartment 55.

The moisture transpires from the food stored inside lower basket 64 with elapse of time from when placed inside. In this case, the air containing the transpired moisture is discharged from outlet for vegetable compartment 45, flows out to the outside of the basket from the gap of lower basket 64 and the rear surface of upper basket 65 along the flow of one part that flowed into lower basket 64 through the upper part of upper basket 65 and air flow-hole 71 formed at upper basket 65, and reaches mist atomizer 67 arranged in the vicinity. The interior of mist atomizer 67 is cooled to be lower than the ambient temperature by air duct 91, so that the moisture in air condenses in the interior of mist atomizer 67. The condensed water is atomized in mist form to the interior of the basket from the gap of lower basket 64 and upper basket 65. As a result, the transpired water from the stored food is again returned to the stored food itself by mist atomizer 67.

Part of the cool air discharged from outlet for vegetable compartment 45 passes lower basket 64 and the rear surface of upper basket 65, and is taken in from inlet for vegetable compartment 46. The air containing the transpired water from the stored food that flowed out to the outside of the basket from the gap of lower basket 64 and the rear surface of upper basket 65 flows the lower side along the flow of the cool air of the rear surface of the basket, and mist atomizer 67 efficiently collects the transpired water as it is arranged in the cool air flow path.

Therefore, in the present embodiment, the humidity leaked out from the gap of the upper basket and the lower basket can be efficiently collected by mist atomizer 67 by arranging mist atomizer 67 near the gap of upper basket 65 and lower basket 64 in the basket. This is then again returned to the basket, so that the interior of the basket is sufficiently humidified and the freshness of the vegetables can be maintained.

The humidity in the storage compartment is more efficiently collected and again returned to the basket by mist atomizer 67 so that the interior of the basket is sufficiently humidified and the freshness of the vegetables is maintained by arranging mist atomizer 67 in one of the cool air flow paths between the cool air outlet and the cool air inlet.

### (Third embodiment)

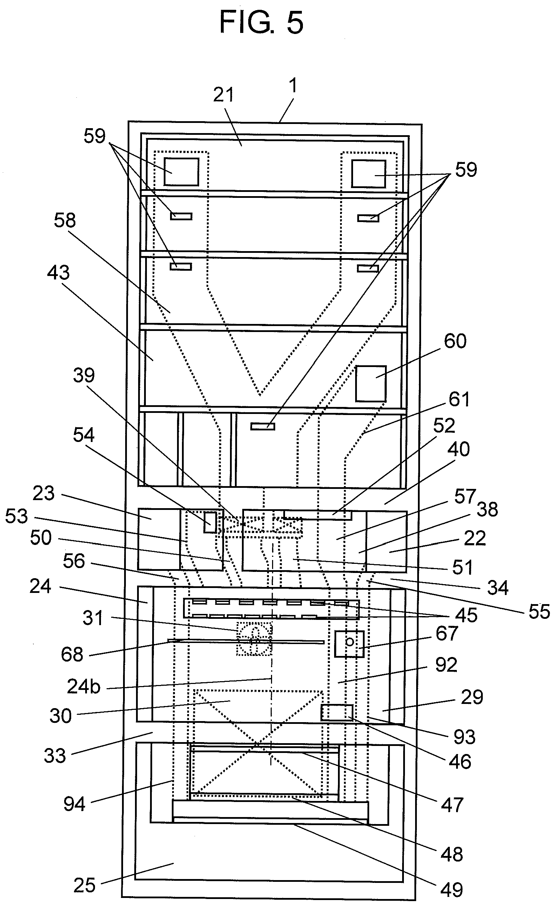

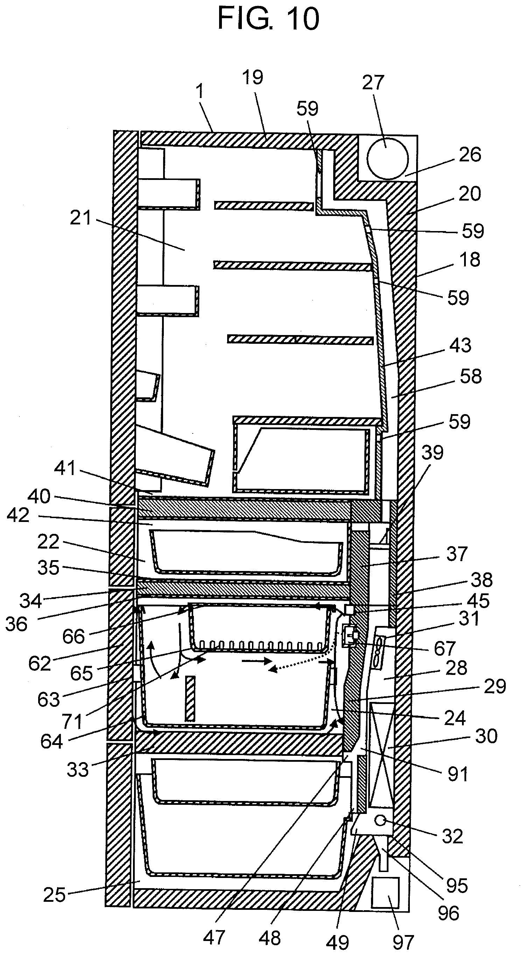

FIG. 5 is a front view according to a third embodiment of the present invention, showing a state in which the door is detached. FIG. 10 is a longitudinal cross-sectional view of the refrigerator according to the third embodiment of the present invention. In FIG. 5 and FIG. 10, the basic configuration is similar to FIG. 1 and FIG. 8 described in the first embodiment. The same components are denoted with the same reference numbers. The difference with the first embodiment lies in that a lower end of mist atomizer 67 is on the upper side than the bottom surface of upper basket 65 at one part of first cooling duct 29.

The operation and the effects of the refrigerator configured as above will be described. The moisture transpires from the food stored inside lower basket 64 with elapse of time from when placed inside. In this case, the air containing the transpired moisture flows out to the outside of the basket from a gap of lower basket 64 and the rear surface of upper basket 65, and reaches mist atomizer 67 arranged nearby along the flow of part of the cool air discharged from outlet for vegetable compartment 45 and flowed into lower basket 64 through the upper space of lid 66. The interior of mist atomizer 67 is cooled to be lower than the ambient temperature by air duct 91, where the moisture in the air condenses inside mist atomizer 67. The condensed water atomizes in a space of the back side of upper basket 65, but the mist particles naturally drop by its own weight, and diffuses to the interior of the basket from the gap of lower basket 64 and upper basket 65 positioned on the lower side of mist atomizer 67. As a result, the transpired water from the stored food is again returned to the stored food itself by mist atomizer 67.

Part of the cool air discharged from outlet for vegetable compartment 45 passes through the rear surface of lower basket 64 and upper basket 65 and is taken in from inlet for vegetable compartment 46. The air containing the transpired water from the stored food that flowed out to the outside of the basket from the gap of lower basket 64 and the rear surface of upper basket 65 flows towards the lower side along the flow of the cool air at the rear surface of the basket, and the transpired water can be efficiently collected since mist atomizer 67 is arranged in the cool air flow path.

Inlet for vegetable compartment 46 for returning the cool air from vegetable compartment 24 again to feedback air duct for refrigerator compartment 92 is arranged at a position at the lower part of vegetable compartment 24 of first cooling duct 29. First outlet for freezer compartment 47 and second outlet for freezer compartment 48 for blowing the cool air from air duct 91 into freezer compartment 25 are arranged at sites corresponding to freezer compartment 25 of first cooling duct 29. Inlet for freezer compartment 49 for returning the cool air from freezer compartment 25 to evaporator 30 is arranged at the lower part of first cooling duct 29.

Mist atomizer 67 is arranged between outlet for vegetable compartment 45 and inlet for vegetable compartment 46 in the up and down direction in vegetable compartment 24.

Thus, mist atomizer 67 is arranged in vegetable compartment 24, where the cool air flows in through outlet for vegetable compartment 45, which is the cool air outlet, from outside vegetable compartment 24, and the cool air flows out to the outside of vegetable compartment 24 through inlet for vegetable compartment 46, which is the cool air inlet, to thereby form a cool flow path in vegetable compartment 24. Mist atomizer 67 is arranged on the cool air flow path.

Furthermore, in the present embodiment, outlet for vegetable compartment 45, which is the cool air outlet, is arranged on the upper side than mist atomizer 67 in the storage compartment including mist atomizer 67. Inlet for vegetable compartment 46, which is the cool air inlet, is arranged on the lower side than mist atomizer 67, and is arranged at a position which the distance in the up and down direction of outlet for vegetable compartment 45 and mist atomizer 67 is shorter than the distance between inlet for vegetable compartment 46 and mist atomizer 67. In other words, mist atomizer 67 is arranged on the upper side close to outlet for vegetable compartment 45 in the up and down direction.

Mist atomizer 67 is arranged at the upper part than center line 24a (see correspondence location of FIG. 4) in the up and down direction of vegetable compartment 24.

Mist atomizer 67 is arranged in the side of inlet for vegetable compartment 46 rather than center line 24b in the left and right direction of vegetable compartment 24.

Thus, mist atomizer 67 is arranged between outlet for vegetable compartment 45 and inlet for vegetable compartment 46 in the up and down direction in vegetable compartment 24. The cool air flows in through outlet for vegetable compartment 45, which is the cool air outlet, from outside vegetable compartment 24, and the cool air flows out to the outside of vegetable compartment 24 through inlet for vegetable compartment 46, which is the cool air inlet, so that a cool flow path is formed in vegetable compartment 24, and mist atomizer 67 is arranged on the cool air flow path.

Since the amount of cool air flowing through the cool air flow path in which the cool air flowed in from outlet for vegetable compartment 45 into the storage compartment flows to the outside of vegetable compartment 24 through inlet for vegetable compartment 46 is large, the flow speed of the cool air becomes relatively fast and the cool air in the basket is pulled so that the cool air of high humidity leaks out to the cool air flow path. The humidity flowed out from the basket thus can be efficiently collected and condensed in mist atomizer 67, the condensed water can be changed to a microscopic mist, and the microscopic mist of high diffusivity can be again returned into the basket, whereby the interior of the basket can be sufficiently humidified with the microscopic mist and the freshness of vegetables can be maintained.

In the present embodiment, outlet for vegetable compartment 45, which is the cool air outlet, is arranged on the upper side than mist atomizer 67 and inlet for vegetable compartment 46, which is the cool air inlet, is arranged on the lower side than mist atomizer 67 in vegetable compartment 24 including mist atomizer 67. The distance in the up and down direction of outlet for vegetable compartment 45 and mist atomizer 67 is shorter than the distance between inlet for vegetable compartment 46 and mist atomizer 67. In other words, mist atomizer 67 is arranged on the upper side close to outlet for vegetable compartment 45 in the up and down direction.

The microscopic mist generated in mist atomizer 67 can flow on the flow of a great amount of cool air that flowed in from outlet for vegetable compartment 45 by arranging mist atomizer 67 on the side close to outlet for vegetable compartment 45, which is the cool air outlet, in the up and down direction. The interior of the basket can be sufficiently humidified and the freshness of the vegetables can be maintained by containing greater amount of microscopic mist in the cool air flowing through vegetable compartment 24.

In vegetable compartment 24 including mist atomizer 67, mist atomizer 67 is arranged on center line 24a in the up and down direction of vegetable compartment 24 or on the upper side than center line 24a in the up and down direction.

The microscopic mist generated in mist atomizer 67 from the upper side can ride on the flow of the cool air flowing through vegetable compartment 24 by applying the characteristics that the cold air flows to the lower side, whereby the interior of the basket can be sufficiently humidified and the freshness of the vegetables can be maintained by containing greater amount of microscopic mist in the cool air flowing through vegetable compartment 24.

Mist atomizer 67 is arranged in the side of inlet for vegetable compartment 46 rathe than center line 24b in the left and right direction of vegetable compartment 24.

Thus, the humidity contained in the cool air can be efficiently collected and condensed by mist atomizer 67 by arranging mist atomizer 67 on the inlet for vegetable compartment 46 side where the humidity becomes higher in the left and right direction. Therefore, the interior of the basket can be sufficiently humidified with the microscopic mist and the freshness of the vegetables can be maintained. The amount of wind of the cool air that flows out to the outside the basket is a small amount, and does not inhibit mist atomization. The moisture of an extent necessary for mist atomization can be supplied to mist atomizer 67. Furthermore, the cool air that flows out to the outside of the basket is suppressed to a very small amount to an extent of not lowering the freshness of food in lower basket 64.

### (Fourth embodiment)

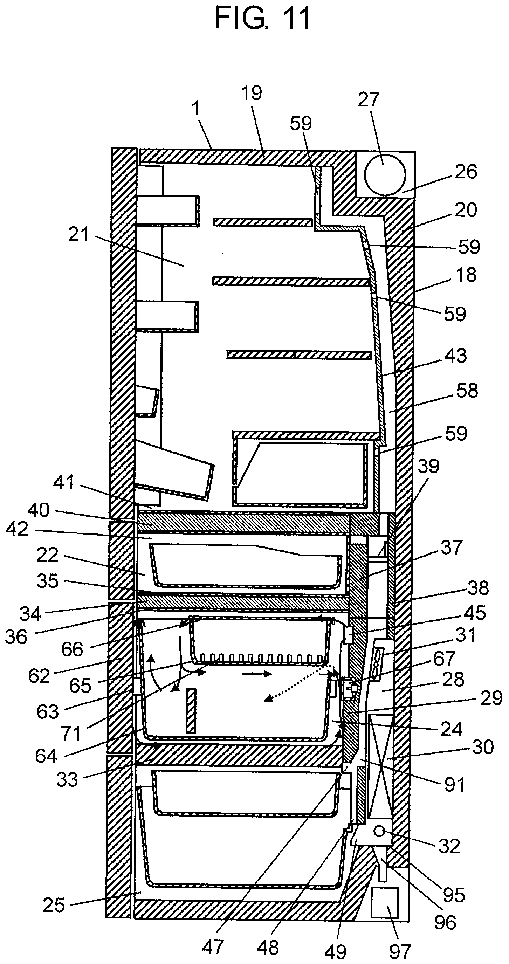

FIG. 11 is a longitudinal cross-sectional view of a refrigerator according to a fourth embodiment of the present invention. In FIG. 11, the basic configuration is similar to FIG. 8 described in the first embodiment. The same components are denoted with the same reference numbers. The difference with the first embodiment lies in that an upper end of mist atomizer 67 arranged at one part of first cooling duct 29 is on the lower side than the upper end of lower basket 64.

The operation and the effects of the refrigerator configured as above will be described. The moisture transpires from the food stored inside lower basket 64 with elapse of time from when placed inside. In this case, the air containing the transpired moisture flows out to the outside of the basket from a gap of lower basket 64 and the rear surface of upper basket 65, along the flow of part of the cool air discharged from outlet for vegetable compartment 45 and flowed into lower basket 64 through the upper space of lid 66. In this case, the flow of the cool air from outlet for vegetable compartment 45 to inlet for vegetable compartment 46 also exists in the space at the rear surface of the basket, and the humidity that flowed out to the outside of the basket is also taken into inlet for vegetable compartment 46. As a result, the region from the gap of upper basket 65 and lower basket 64 to inlet for vegetable compartment 46 is maintained at a relatively high humidity. Mist atomizer 67 is arranged in the region of relatively high humidity as the upper end is on the lower side than the upper surface of lower basket 64.

The interior of mist atomizer 67 is cooled to be lower than the ambient temperature by air duct 91, where the moisture in the air condenses inside mist atomizer 67. Even though the moisture condensed inside mist atomizer 67 is atomized as the mist particles, the atomized mist particles are discharged from inlet for vegetable compartment 46 in a state the cool air is circulating in vegetable compartment 24. However, if compressor 27 is stopped or the refrigerator compartment side of twin damper 39 is closed, the interior of vegetable compartment 24 is in a state of natural convection, so that the atomized mist particles circulate inside vegetable compartment 24 while riding on the natural convection. As a result, the transpired water from the stored food is again returned to the stored food itself by mist atomizer 67.

Thus the humidity that leaked out from the gap of upper basket 65 and lower basket 64 is efficiently collected by atomizer 67 and again returned into the basket so that the interior of the basket can be sufficiently humidified and the freshness of the vegetables can be maintained by arranging mist atomizer 67 in the vicinity of the gap of the upper basket and the lower basket of the basket,.

The humidity in the storage compartment can be efficiently collected and again returned to the basket by mist atomizer 67 so that the interior of the basket can be sufficiently humidified and the freshness of the vegetables can be maintained by arranging mist atomizer 67 in one of the cool air flow paths between the cool air outlet and the cool air inlet.

In the present embodiment, mist atomizer 67 is arranged between the cool air outlet and the cool air inlet in the cooling duct arranged in the storage compartment and including the cool air outlet and the cool air inlet. The humidity flowing between the cool air outlet and the cool air inlet can be efficiently condensed and collected by cooling mist atomizer 67 to a temperature lower than the interior of the storage compartment with the cooling duct.

### (Fifth embodiment)

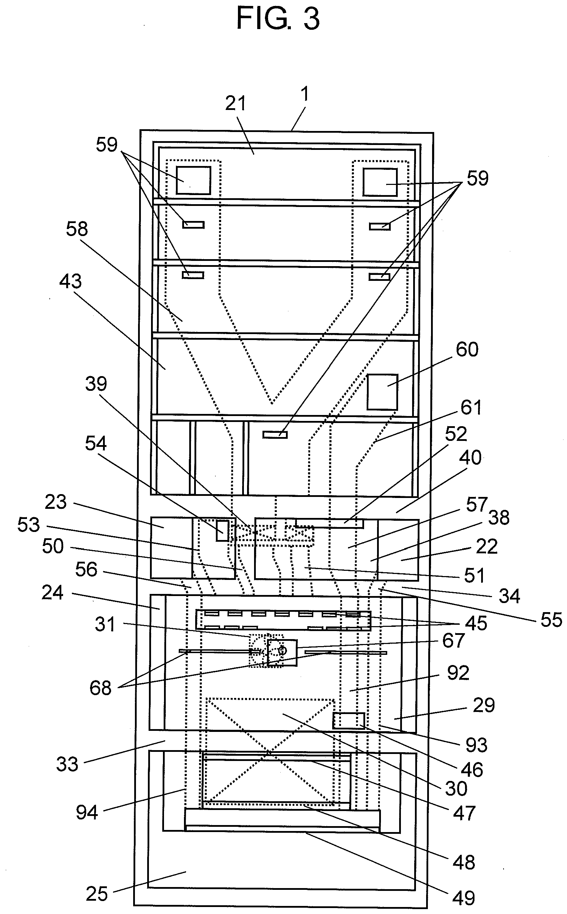

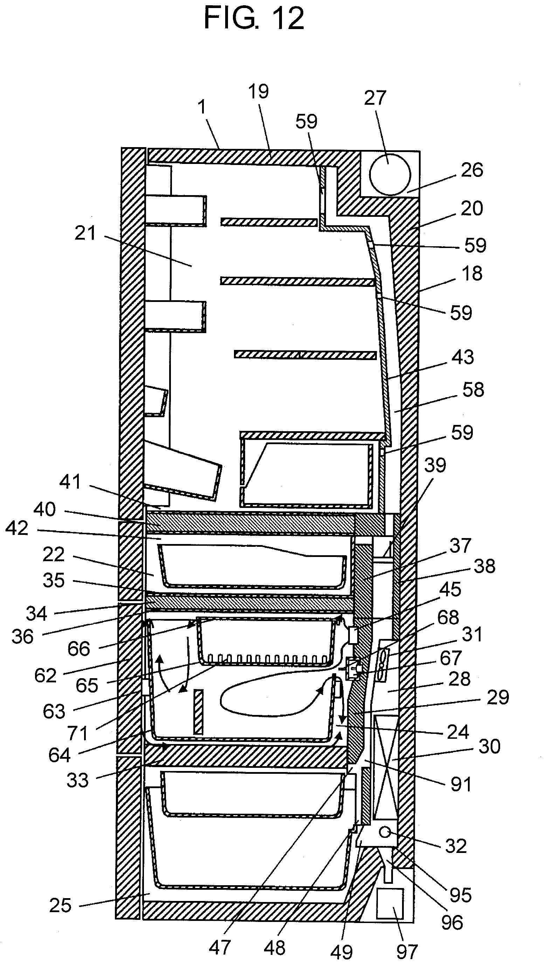

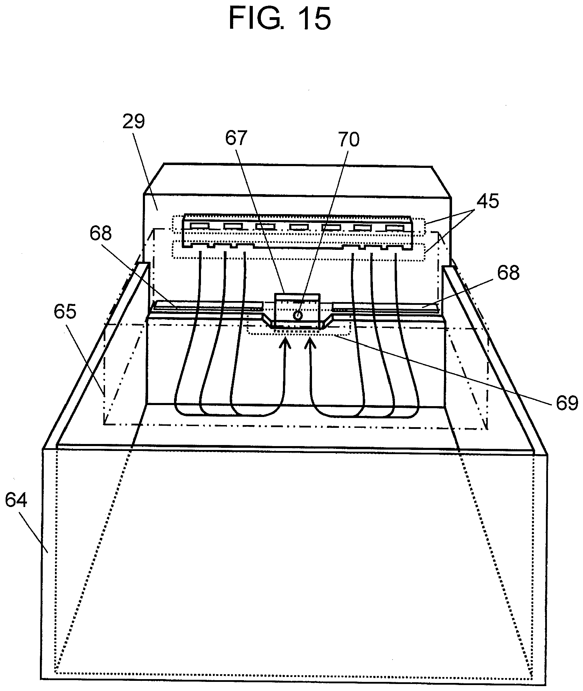

FIG. 3 is a front view according to a fifth embodiment of the present invention, showing a state in which the door is detached. FIG. 12 is a longitudinal cross-sectional view of the refrigerator according to the fifth embodiment of the present invention. In FIG. 3 and FIG. 12, the basic configuration is similar to FIG. 1 and FIG. 8 described in the first embodiment. The same components are denoted with the same reference numbers. The difference with the first embodiment lies in including wind direction rib 68. FIG. 15 is a perspective view from the front surface of the vegetable compartment in the fifth embodiment of the present invention.

Mist atomizer 67 is arranged at one part of first cooling duct 29, and is positioned near the gap between lower basket 64 and upper basket 65. Wind direction rib 68 extending in a substantially horizontal direction in vegetable compartment 24 is integrally molded with first cooling duct 29 at the left and the right of mist atomizer 67. Wind direction rib 68 is arranged on the upper side than the upper end of the rear surface of lower basket 64 to partition the space between upper basket 65, lower basket 64 and first cooling duct 29 to top and bottom. In this case, wind direction rib 68 and upper basket 65, and wind direction rib 68 and lower basket 64 are provided with a space of an extent of not contacting each other when the door is opened or closed in the front and back direction. In the present embodiment, wind direction rib 68 is arranged on the upper side than the upper end of the rear surface of lower basket 64, but may be the same height as lower basket 64.

Recess 69, which is a cool air flow-out portion, is arranged near mist atomizer 67 at one part of the upper end of the rear surface of lower basket 64, and is formed lower than the upper end of the rear surface of lower basket 64. Furthermore, recess 69 where the gap of upper basket 65 and lower basket 64 is the largest is formed in lower basket 64, and recess 69 of lower basket 64 is arranged at a position facing mist atomizer 67.

The position of the top and bottom and the left and the right of recess 69 merely needs to be such that atomization port 70 of mist atomizer 67 is not hidden by the rear surface of lower basket 64. The cool air flow-out portion from basket is formed by recess 69 and the bottom surface of upper basket 65. A plurality of air flow-holes 71 is formed at one part of upper basket 65.

Part of the cool air discharged from outlet for vegetable compartment 45 passes between lid 66 and second partition 34, and enters the front portion of lower basket 64 from the front portion of upper basket 65. The cool air also passes again between the lower part of lower basket 64 and first partition 33 from the front portion of lower basket 64, is taken in from inlet for vegetable compartment 46, and converges to feedback air duct for refrigerator compartment 92.

From outlet for vegetable compartment 45, part of the cool air is discharged to the lower side along the wall of first cooling duct 29, and has the wind direction changed by wind direction rib 68 integrally formed in first cooling duct 29 and arranged on the left and right of mist atomizer 67, so that the cool air flows more or less to the front side. As described above, wind direction rib 68 is positioned at the same height as or on the upper side of the upper end of the rear surface of lower basket 64, and thus the cool air of which wind direction is changed to the front side enters lower basket 64 from the gap of the bottom surface of upper basket 65 and the upper end of the rear surface of lower basket 64 and cools the stored food inside.

The moisture transpires from the food stored inside lower basket 64 with elapse of time from when placed inside. In this case, the air containing transpired moisture flows out to the outside of the basket from a cool air flow-out portion defined by recess 69 and the bottom surface of upper basket 65, and reaches mist atomizer 67 arranged nearby along the flow of the cool air flowed into lower basket 64. The cool air of high humidity in lower basket 64 thus flows out to the outside of lower basket 64 with recess 69 as the center, where the amount is the greatest in recess 69 of lower basket 64 or the cool air flow-out portion. The periphery of mist atomizer 67 is thus an atmosphere of high humidity. The interior of mist atomizer 67 is cooled to be lower than the ambient temperature by air duct 91, where the moisture in the air condenses inside mist atomizer 67. The condensed water is atomized in a mist-form from the cool air flow-out portion defined by recess 69 and the bottom surface of upper basket 65 to the interior of the basket. The transpired water from the stored food is again returned to the stored food itself by mist atomizer 67.

The amount of cool air flowing through the cool air flow path in which the cool air flowed in from outlet for vegetable compartment 45 into the storage compartment flows to the outside of vegetable compartment 24 through inlet for vegetable compartment 46 is large, and thus the flow speed of the cool air becomes relatively fast and the cool air in the basket is pulled so that the cool air of high humidity leaks out to the cool air flow path with recess 69 of lower basket 64 as the center. Since mist atomizer 67 is arranged at an opposing position of recess 69, the cool air of high humidity from the interior of the basket can be efficiently collected and condensed in mist atomizer 67, whereby the condensed water can be changed to a microscopic mist, and the microscopic mist of high diffusivity can be again returned into the basket. Therefore, the interior of the basket can be sufficiently humidified with the microscopic mist and the freshness of vegetables can be maintained.

Therefore, in the present embodiment, the cool air from the cool air outlet is introduced into the basket, and flowed out to the outside of the basket from an area proximate to mist atomizer 67 of the basket. The humidity in the basket that is delivered from the cool air inlet to the evaporator under normal circumstances can be efficiently collected and again returned to the basket by mist atomizer 67, whereby the interior of the basket is sufficiently humidified and the freshness of the vegetables can be maintained.

Furthermore, in the present embodiment, the cool air flow-out portion is arranged in the vicinity of mist atomizer 67, whereby the vicinity of mist atomizer 67 becomes high humidity due to the humidity from inside the basket, and the humidity can be efficiently condensed and collected.

In the present embodiment, the basket is configured by the upper basket and the lower basket, and the cool air flow-out portion is arranged at the gap of the upper basket and the lower basket. The humidity from the lower basket, where leaf vegetables etc. are often stored and where transpiration of moisture is great, is efficiently concentrated near mist atomizer 67 so as to be easily collected by mist atomizer 67.

Moreover, in the present embodiment, the recess is arranged at the upper end of the rear surface of the lower basket. A sealed accurate partition does not need to be formed, and the cool air flow-out portion can be configured with a simple configuration. Thus, the vicinity of mist atomizer 67 becomes high humidity due to the humidity in the lower basket, and the humidity can be efficiently collected by mist atomizer 67.

In vegetable compartment 24, mist atomizer 67 is arranged between outlet for vegetable compartment 45 and inlet for vegetable compartment 46 in the up and down direction. As the cool air flows in through outlet for vegetable compartment 45, which is the cool air outlet, from outside vegetable compartment 24, and as the cool air flows out to the outside of vegetable compartment 24 through inlet for vegetable compartment 46, which is the cool air inlet, the cool air mainly flows the outer side of the basket arranged in vegetable compartment 24 and flows out to the outside of vegetable compartment 24 through inlet for vegetable compartment 46 after flowed in from inlet for vegetable compartment 46 in vegetable compartment 24. Mist atomizer 67 is arranged on the cool air flow path that connects outlet for vegetable compartment 45 and inlet for vegetable compartment 46 with the shortest distance.

Furthermore, in the present embodiment, outlet for vegetable compartment 45, which is the cool air outlet, is arranged on the upper side than mist atomizer 67 in the storage compartment (vegetable compartment 24) including mist atomizer 67. Inlet for vegetable compartment 46, which is the cool air inlet, is arranged on the lower side than mist atomizer 67. The distance in the up and down direction of outlet for vegetable compartment 45 and mist atomizer 67 is shorter than the distance between inlet for vegetable compartment 46 and mist atomizer 67. In other words, mist atomizer 67 is arranged on the upper side close to outlet for vegetable compartment 45 in the up and down direction.

Furthermore, mist atomizer 67 is arranged at an upper part than center line 24a (see corresponding center line 24a of Fig. 4) in the up and down direction of vegetable compartment 24. Mist atomizer 67 generates mist using the condensed water obtained by condensing the moisture in the surrounding air and atomizes the same into a space in the storage compartment (vegetable compartment 24). In the present embodiment, mist atomizer 67 is cooled using air duct 91 blown with the cool air on the rear surface side of mist atomizer 67.

Recess 69, which is the cool air flow-out portion where the amount of cool air that flows out from inside lower basket 64 to outside lower basket 64 is the greatest, is arranged near mist atomizer 67 at one part of the upper end of the rear surface of lower basket 64, and recess 69 is formed lower than the upper end of the rear surface of lower basket 64.

The cool air flow-out portion where the amount of cool air that flows out from inside lower basket 64 to outside lower basket 64 is the greatest is recess 69 or a location where the gap between upper basket 65 and lower basket 64 is the largest in lower basket 64, and recess 69 of lower basket 64 is arranged at a position facing mist atomizer 67.

The position of the top and bottom and the left and right of recess 69 merely needs to be such that atomization port 70 of mist atomizer 67 is not hidden by the rear surface of lower basket 64.

The cool air flow-out portion from the basket is a gap formed by recess 69 and the bottom surface of upper basket 65, and such portion is the location where the amount of cool air that flows out from inside lower basket 64 to outside lower basket 64 is the greatest.

Mist atomizer 67 is a type that condenses moisture in air and replenishes water, which interior is cooled lower than the ambient temperature by air duct 91, so that the moisture in the air condenses inside mist atomizer 67. The condensed water is atomized in a mist-form from the cool air flow-out portion defined by recess 69 and the bottom surface of upper basket 65 to the interior of the basket. As a result, the transpired water from the stored food is again returned to the stored food itself by mist atomizer 67.

A damper positioned on the upstream than outlet for vegetable compartment 45 is arranged on the air duct, where if the cool air is not flowing in from outlet for vegetable compartment 45, such damper is closed. Generally, a damper is not arranged on the downstream than inlet for vegetable compartment 46, and thus the cool air in vegetable compartment 24 flows out from inlet for vegetable compartment 46 to outside vegetable compartment 24 although by a small amount. In such case, the flow of the cool air generates from inside lower basket 64, which is a basket, towards inlet for vegetable compartment 46.

Thus, even if the cool air is not flowing in from outlet for vegetable compartment 45, the cool air of high humidity flows out from the cool air flow-out portion where the amount of flowing cool air is the greatest since the wall surface in the height direction of lower basket 64 is the lowest location and is the location where the gap between the bottom surface of upper basket 65 and the upper end of the rear surface of lower basket 64 is the largest. Therefore, the periphery of mist atomizer 67 arranged in the vicinity of such cool air flow-out portion becomes an atmosphere of high humidity, and an environment in which the moisture in air easily condenses in the interior of mist atomizer 67 is realized.

Moreover, in the present embodiment, outlet for vegetable compartment 45, which is the cool air outlet, is arranged on the upper side than mist atomizer 67 in vegetable compartment 24 including mist atomizer 67. Inlet for vegetable compartment 46, which is the cool air inlet, is arranged on the lower side than mist atomizer 67, and is arranged at a position such that the distance in the up and down direction of outlet for vegetable compartment 45 and mist atomizer 67 is shorter than the distance between inlet for vegetable compartment 46 and mist atomizer 67. In other words, mist atomizer 67 is arranged on the upper side close to outlet for vegetable compartment 45 in the up and down direction, and mist atomizer 67 is arranged on center line 24a in the up and down direction of vegetable compartment 24 or on the upper side than center line 24a in the up and down direction.

The atomized mist particles are atomized on the flow of the cool air in vegetable compartment 24 by applying the characteristics that the cold air flows to the lower side, and thus the diffusivity can be enhanced and the mist can be more effectively atomized.

The gap of mist atomizer 67, lower basket 64, and upper basket 65 is not limited to that shown in Fig. 12 in the up and down positional relationship, and may be slightly shifted. If part of mist atomizer 67 is approximately the same height as the gap of lower basket 64 and upper basket 65, the air containing the transpired water from the stored food that flowed out to the outside of the basket from the gap of lower basket 64 and the rear surface of upper basket 65 can be efficiently collected, and such transpired water can again be atomized as mist.

In the present embodiment, the damper is not arranged on the downstream side of inlet for vegetable compartment 46 or the downstream side where the cool air in vegetable compartment 24 flows out, and it is communicated with the downstream side of the air duct.

Thus, when the damper positioned on the upstream on the air duct of the cool air of outlet for vegetable compartment 45 that flows the cool air into vegetable compartment 24 or the storage compartment including an atomizing device or the mist atomizer is closed, that is, when the cool air is not flowing in from outlet for vegetable compartment 45, the flow of the cool air from inside vegetable compartment 24 to inlet for vegetable compartment 46 generates although by a small amount even if the cool air is not flowing in from outlet for vegetable compartment 45 since the downstream side of the air duct is communicating with the downstream side of inlet for vegetable compartment 46 or the downstream side where the cool air of vegetable compartment 24 flows out. Therefore, even in such state, the cool air in lower basket 64 flows out to outside the basket from the cool air flow-out portion towards inlet for vegetable compartment 46 and reaches mist atomizer 67 arranged in the vicinity of the cool air flow-out portion. Therefore, the vicinity of mist atomizer 67 becomes an atmosphere of high humidity, and an environment in which condensation can be easily carried out near the atomizing device is realized.

In the present embodiment, air duct 91 blown with the cool air on the rear surface side is used as a cooling means for cooling mist atomizer 67 to lower than or equal to a dew point. With the cool air lower than the temperature of the periphery of the mist generation department in the freezing cycle as the cooling means, mist atomizer 67 can be cooled with a simple configuration without arranging a dedicated cooling means, and an atomizing device or a mist atomizer can be arranged while saving resource and saving energy.

If the cool air lower than the temperature of the periphery of the mist generation department in the freezing cycle is the cooling means, a low temperature cool air of the adjacent partition partitioned with an insulated wall from the storage compartment including mist atomizer 67 is used, where the cooling means is not limited to air duct 91 of the rear surface, and may be low temperature air of the adjacent storage compartment, and the like.

Therefore, in the present embodiment, the cool air from the cool air outlet (outlet for vegetable compartment 45) is introduced into the basket (lower basket 64, upper basket 65), and flowed out to the outside of the basket (lower basket 64, upper basket 65) from an area proximate to mist atomizer 67 of the basket (lower basket 64, upper basket 65). The humidity in the basket (lower basket 64, upper basket 65) that is delivered from the cool air inlet (inlet for vegetable compartment 46) to evaporator 30 under normal circumstances can be efficiently collected and again returned to the basket (lower basket 64, upper basket 65) by mist atomizer 67. Therefore, the interior of the basket (lower basket 64, upper basket 65) can be sufficiently humidified, and the freshness of the vegetables can be maintained.

Furthermore, in the present embodiment, the cool air flow-out portion, where the amount of cool air that leaks out from inside the basket (mainly lower basket 64) is the greatest, or a space for atomizing mist is arranged in the vicinity of mist atomizer 67. The vicinity of mist atomizer 67 thus becomes high humidity due to the humidity from inside the basket (mainly lower basket 64), and the humidity can be efficiently condensed and collected.

In the present embodiment, the basket is configured by upper basket 65 and lower basket 64, and the cool air flow-out portion is arranged at the gap of upper basket 65 and lower basket 64 (gap of upper basket 65 and lower basket 64 is the cool air flow-out portion). The humidity from lower basket 64, where leaf vegetables etc. are often stored and where transpiration of moisture is great, is efficiently concentrated near mist atomizer 67 so as to be easily collected by mist atomizer 67.

Moreover, in the present embodiment, recess 69 is arranged at the upper end of the rear surface of lower basket 64, where a sealed accurate partition does not need to be formed, and the cool air flow-out portion can be configured with a simple configuration. Thus, the vicinity of mist atomizer 67 becomes high humidity due to the humidity from inside lower basket 64, and the humidity can be efficiently collected by mist atomizer 67.

In the present embodiment, the cool air flow-out portion where the amount of cool air that flows out from the basket (lower basket 64, upper basket 65) is the greatest has been described as recess 69 formed on the wall surface of the basket (lower basket 64), but the cool air flow-out portion may be an opened hole formed in the basket (lower basket 64).

In the present embodiment, recess 69 formed lower than the upper end of the rear surface of lower basket 64 is the cool air flow-out portion where the amount of cool air that flows out from inside lower basket 64 to outside lower basket 64 is the greatest. However, even if a lowest location is provided in the basket for a different purpose, such location will not be the cool air flow-out portion if it is not the location where the amount of cool air that flows out from inside lower basket 64 to outside lower basket 64 is the greatest, and thus the location where the amount of cool air that flows out from inside lower basket 64 to outside lower basket 64 is substantially the greatest is the cool air flow-out portion.

The cool air flow-out portion where the amount of cool air that flows out from inside lower basket 64 to outside lower basket 64 is the greatest is the location where the gap of upper basket 65 and lower basket 64 is the largest in lower basket 64. However, when atomizing the mist to upper basket 65 side, the gap of upper basket 65 and the wall surface at the upper part or upper basket 65 may be the cool flow-out portion. With the location where the amount of cool air that flows out from inside the basket to outside the basket is the greatest as the cool air flow-out portion regardless of the arrangement relationship in the present embodiment, mist atomizer 67 is arranged in the vicinity thereof.

Wind direction rib 68, which is a cool air introducing means, is arranged on a lower side than outlet for vegetable compartment 45, which is the cool air outlet. Applying the characteristic that the cold air flows to the lower side, a flow path forms in which the cool air of high humidity riding on the flow of great amount of cool air that flowed in from outlet for vegetable compartment 45 has the direction changed by wind direction rib 68 arranged on the lower side, flows into lower basket 64 and circulates in lower basket 64, and thereafter, flows out to the outside of lower basket 64 as the cool air of high humidity. The cool air is actively sent into the basket and then circulated, and then the humidity in the basket can be carried to the vicinity of mist atomizer 67, and thus the interior of lower basket 64 can be sufficiently humidified by mist atomizer 67 and the freshness of the vegetables can be maintained.

The present invention includes wind direction rib 68, which is the cool air introducing means, on a rear surface wall side at which the amount of flowing cool air is great in a cool air flow path in which the cool air that flowed into vegetable compartment 24 from outlet for vegetable compartment 45, which is the cool air outlet, flows to outside vegetable compartment 24 through inlet for vegetable compartment 46, which is the cool air inlet. Thus, the cool air can be actively sent into the basket and circulated, and then the humidity in the basket can be carried to the vicinity of mist atomizer 67, the humidity can be collected by mist atomizer 67, the interior of the basket can be sufficiently humidified, and the freshness of the vegetables can be maintained.

The basket includes upper basket 65 and lower basket 64, and wind direction rib 68, which is the cool air introducing means, is arranged near the gap of the baskets, so that the cool air can be sent to lower basket 64 side and circulated, and then the humidity in lower basket 64 can be efficiently collected by mist atomizer 67. Humidity is again returned into lower basket 64 by mist atomizer, so that the interior of lower basket 64 can be sufficiently humidified and the freshness of the vegetables can be maintained.

Wind direction rib 68, which is the cool air introducing means, is arranged projecting out from the wall surface in vegetable compartment 24, so that a cool air introducing means for changing the wind direction of the cool air with a simple structure can be arranged, and a cool air introducing means of few failures and high reliability can be arranged.

Furthermore, since wind direction rib 68 is arranged on the upper side than the upper end of the basket on the side facing wind direction rib 68, the characteristics that the cold air flows to the lower side can be applied. A flow path can be formd, in which the cool air of high humidity riding on the great amount of cool air that flowed in from outlet for vegetable compartment 45, which is the cool air outlet, has the direction changed by wind direction rib 68 arranged on the lower side, flows into the basket and circulates in the basket, and thereafter, flows out to the outside of the basket as the cool air of high humidity. The cool air is actively sent into the basket and then circulated, and then the humidity in the basket can be carried to the vicinity of mist atomizer 67, whereby the humidity is collected and returned to the basket by mist atomizer 67 so that the interior of the basket can be sufficiently humidified and the freshness of the vegetables can be maintained.

As described in the present embodiment, the cool air introducing means is arranged at the side of mist atomizer 67. The cool air introduced into the basket can be circulated in the basket, the humidity in the basket can be carried to the vicinity of mist atomizer 67, and the humidity can be collected and again returned to the basket by mist atomizer 67. Thus, the interior of the basket can be sufficiently humidified and the freshness of the vegetables can be maintained.

In the present embodiment, the basket is configured by the upper basket and the lower basket, and the gap between the upper basket and the lower basket is widened at the vicinity of mist atomizer 67. The humidity from the interior of the basket thus can be efficiently collected to the vicinity of mist atomizer 67, and condensed and collected by mist atomizer 67.

In the present embodiment, in the cooling duct arranged in the storage compartment and including the cool air outlet and the cool air inlet, the cool air introducing means is configured by wind direction rib 68 integrally formed with the cooling duct. The flow of the cool air discharged from the cool air outlet is changed by the wind direction rib so as to be easily introduced into the basket.

A damper positioned on the upper stream than outlet for vegetable compartment 45 is arranged on the air duct, where if the cool air is not flowing in from outlet for vegetable compartment 45, such damper is closed. Generally, a damper is not arranged on the lower stream than inlet for vegetable compartment 46, and thus the cool air in vegetable compartment 24 flows out from inlet for vegetable compartment 46 to outside vegetable compartment 24 although by a small amount. In such case, the flow of the cool air generates from inside lower basket 64, which is the basket, towards inlet for vegetable compartment 46. However, in such case as well, the cool air that flowed out from lower basket 64 has the wind direction changed by wind direction rib 68, which is the cool air introducing means, and is collected near mist atomizer 67 without being directed to the upper side, and thus the humidity is more easily collected by mist atomizer 67.

The cool air of high humidity flows out from the cool air flow-out portion where the amount of cool air that flows is the greatest since it is the location where the wall surface in the height direction of lower basket 64 is the lowest and is the location where the gap between the bottom surface of upper basket 65 and the upper end of the rear surface of lower basket 64 is the largest. The periphery of mist atomizer 67 arranged in the vicinity of such cool air flow-out portion thus becomes an atmosphere of high humidity, and an environment in which the moisture in air easily condenses in the interior of mist atomizer 67 is realized.

Therefore, the humidity in lower basket 64 can be carried to the vicinity of mist atomizer 67 by wind direction rib 68, which is the cool air introducing means arranged on the left and the right of mist atomizer 67. The humidity is collected and again returned to lower basket 64 by mist atomizer 67, whereby the interior of lower basket 64 can be sufficiently humidified and the freshness of the vegetables can be maintained.

Furthermore, since wind direction rib 68, which is the cool air introducing means, is arranged on the lower side than outlet for vegetable compartment 45, which is the cool air outlet, the characteristic that the cold air flows to the lower side can be applied. A flow path forms in which the cool air of high humidity riding on the great amount of cool air that flowed in from outlet for vegetable compartment 45 has the direction changed by wind direction rib 68 arranged on the lower side, flows into lower basket 64 and circulates in lower basket 64, and thereafter, flows out to the outside of lower basket 64 as the cool air of high humidity. The cool air is actively sent into the basket to cool the interior of the basket, and then the humidity in the basket can be carried to the vicinity of mist atomizer 67. The interior of lower basket 64 thus can be sufficiently humidified by mist atomizer 67 and the freshness of the vegetables can be maintained.

The present invention includes wind direction rib 68, which is the cool air introducing means, on a rear surface wall side at which the amount of flowing cool air is great in a cool air flow path in which the cool air that flowed into vegetable compartment 24 from outlet for vegetable compartment 45, which is the cool air outlet, flows to outside vegetable compartment 24 through inlet for vegetable compartment 46, which is the cool air inlet. Thus, the cool air can be actively sent into the basket and circulated, and then the humidity in the basket can be carried to the vicinity of mist atomizer 67, the humidity can be collected by mist atomizer 67, the interior of the basket can be sufficiently humidified, and the freshness of the vegetables can be maintained.

In this case, a heater etc. (not shown) is arranged on the lower side than at least wind direction 68, which is the cool air introducing means, of the rear surface wall inside vegetable compartment 24, so that the rear surface wall is appropriately heated, and the mist particles diffused to the outside of the basket and the transpired water from the vegetables do not condense.

Thus, the rising air current easily generates at the rear surface wall arranged with wind direction rib 68 compared to other wall surfaces, where the humidity easily rises to the upper side on such rising air current, and the humidity can be carried to the vicinity of mist atomizer 67 without rising to the upper side by wind direction rib 68, which is the cool air introducing means. The humidity is collected and returned to the basket by mist atomizer 67, so that the interior of the basket can be sufficiently humidified and the freshness of the vegetables can be maintained.

Therefore, in the present embodiment, wind direction rib 68 serving as the cool air introducing means is arranged at the side of mist atomizer 67. The cool air introduced into the basket (lower basket 64, upper basket 65) can be circulated in the basket (lower basket 64, upper basket 65), and the humidity in the basket (lower basket 64, upper basket 65) can be carried to the vicinity of mist atomizer 67. The humidity can be collected and again returned to the basket (lower basket 64, upper basket 65) by mist atomizer 67, so that the interior of the basket (lower basket 64, upper basket 65) can be sufficiently humidified and the freshness of the vegetables can be maintained.

In the present embodiment, the basket is configured by upper basket 65 and lower basket 64, and the gap between upper basket 65 and lower basket 64 is widened at the vicinity of mist atomizer 67. The humidity from the basket (lower basket 64, upper basket 65) is efficiently collected to the vicinity of mist atomizer 67, and then the flow to the upper side is stopped by wind direction rib 68, which is the cool air introducing means, continuously arranged in the left and right direction of mist atomizer 67 so that the humidity can be collected to mist atomizer 67. Thus, the humidity can be condensed and collected by mist atomizer 67.

In the present embodiment, in first cooling duct 29 arranged in the storage compartment (vegetable compartment 24) and including the cool air outlet (outlet for vegetable compartment 45) and the cool air inlet (inlet for vegetable compartment 46), the cool air introducing means is configured by wind direction rib 68 integrally formed with first cooling duct 29. The flow of the cool air discharged from the cool air outlet (outlet for vegetable compartment 45) is changed by wind direction rib 68 so as to be easily introduced into the basket (lower basket 64, upper basket 65).

### (Sixth embodiment)

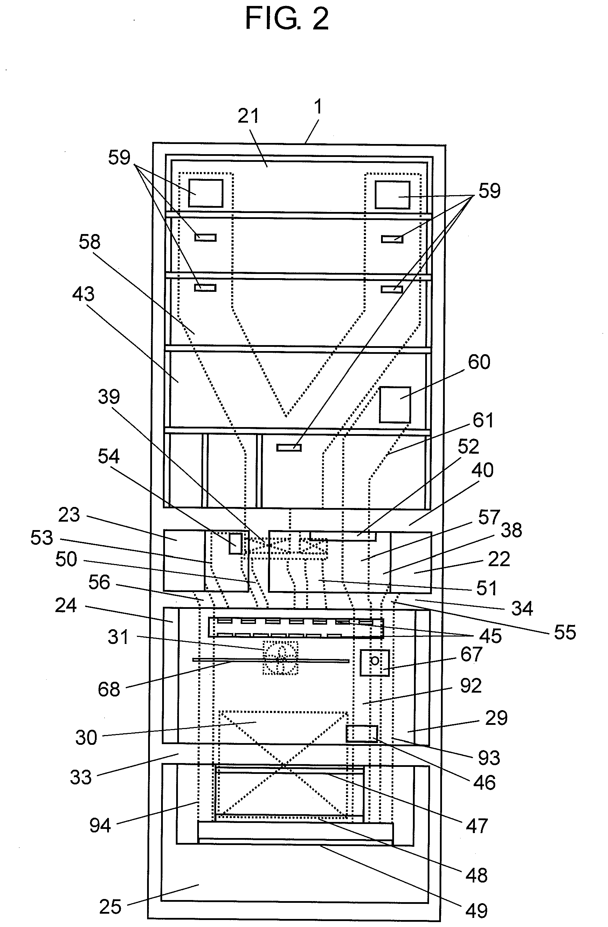

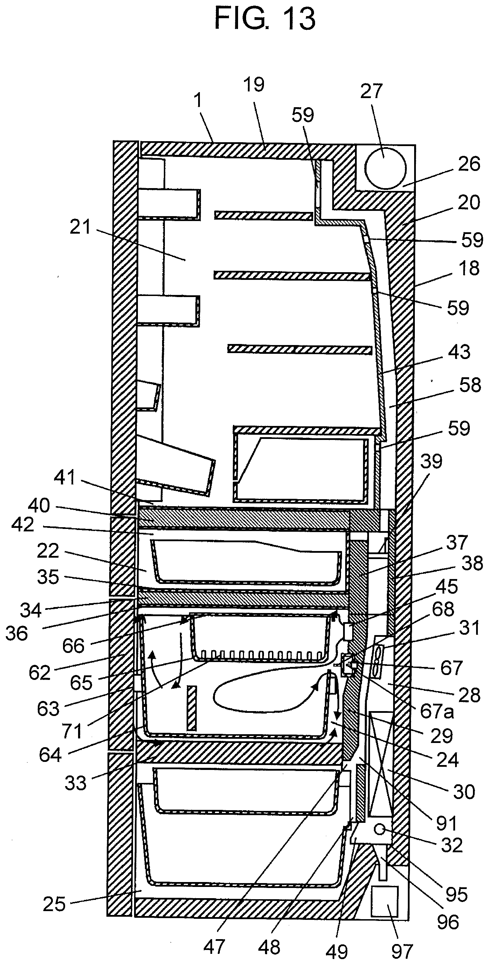

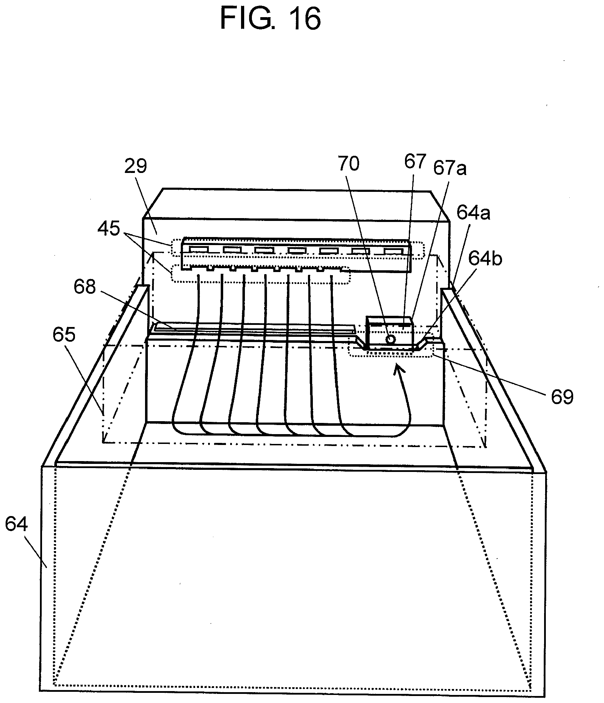

FIG. 2 is a front view according to a sixth embodiment of the present invention, and is a view of a state in which the door is detached. FIG. 13 is a longitudinal cross-sectional view of the refrigerator according to the sixth embodiment. In FIG. 2 and FIG. 13, the basic configuration is similar to FIG. 3 and FIG. 12 described in the fifth embodiment. The same components are denoted with the same reference numbers. The difference with the third embodiment lies in that the positions of wind direction rib 68 and mist atomizer 67 are different. FIG. 16 is a perspective view of a vegetable compartment according to the sixth embodiment of the present invention.

Mist atomizer 67 is arranged at one part of first cooling duct 29, and is positioned near the gap of lower basket 64 and upper basket 65. Mist atomizer 67 is arranged at one part of first cooling duct 29, where upper end 67a of mist atomizer 67 is on the lower side than uppermost end 64a of lower basket 64. Recess 69, which is the cool air flow-out portion, where the gap of upper basket 65 and lower basket 64 is the largest is arranged in lower basket 64, and recess 69 of lower basket 64 is arranged at a position facing mist atomizer 67. Upper end 64b of lower basket 64 at the position facing mist atomizer 67 is positioned on the upper side than atomization port 70 of mist atomizer 67.

Furthermore, wind direction rib 68 extending in a substantially horizontal direction in vegetable compartment 24 is integrally molded with first cooling duct 29 at the left side of mist atomizer 67. Wind direction rib 68 is positioned on the upper side than the upper end of the rear surface of lower basket 64 to partition a space between upper basket 65, lower basket 64 and first cooling duct 29 to top and bottom. In this case, wind direction rib 68 and upper basket 65, and wind direction rib 68 and lower basket 64 are provided with a space of an extent of not contacting each other when the door is opened or closed in the front and back direction. In the present embodiment, wind direction rib 68 is arranged on the upper side than the upper end of the rear surface of lower basket 64, but may be the same height as lower basket 64. Furthermore, mist atomizer 67 is arranged on the right side and wind direction rib 68 is arranged on the left side in the present embodiment, but the positional relationship of mist atomizer 67 and wind direction rib 68 may be interchanged. Wind direction rib 68 is desirably arranged on both sides of mist atomizer 67.

Recess 69 is arranged near mist atomizer 67 at one part of the upper end of the rear surface of lower basket 64, and is formed lower than the upper end of the rear surface of lower basket 64. The position of the top and bottom and the left and the right of recess 69 merely needs to be such that atomization port 70 of mist atomizer 67 is not hidden by the rear surface of lower basket 64.

The cool air flow-out portion from basket is formed by recess 69 and the bottom surface of upper basket 65. A plurality of air flow-holes 71 is formed at one part of upper basket 65.

The moisture transpires from the food stored inside lower basket 64 with elapse of time from when placed inside. In this case, the air containing transpired moisture flows out to the outside of the basket from a cool air flow-out portion defined by recess 69 and the bottom surface of upper basket 65, and reaches mist atomizer 67 arranged nearby along the flow of the cool air flowed into lower basket 64. The interior of mist atomizer 67 is cooled to be lower than the ambient temperature by air duct 91, where the moisture in the air condenses inside mist atomizer 67. The condensed water is atomized in a mist-form from the cool air flow-out portion defined by recess 69 and the bottom surface of upper basket 65 to the interior of the basket. The transpired water from the stored food is again returned to the stored food itself by mist atomizer 67.

Thus, upper end 64b of lower basket 64 at the position facing mist atomizer 67 is positioned on the upper side than atomization port 70 of mist atomizer 67.

Thus, as mist atomizer 67 is positioned at the lower part than upper most end 64a of lower basket 64, the cool air of high humidity in the lower basket is suppressed from leaking from uppermost end 64a. Mist atomizer 67 is thus installed in an atmosphere of high humidity. Furthermore, upper end 64b of lower basket 64 at the position facing mist atomizer 67 is positioned on the upper side than atomization port 70 of mist atomizer 67. The amount of cool air flowing through the cool air flow path in which the cool air that flowed in from outlet for vegetable compartment 45 into the storage compartment flows to the outside of vegetable compartment 24 through inlet for vegetable compartment 46 is large, and thus the flow speed of the cool air becomes relatively fast and the cool air in the basket is pulled so that the cool air of high humidity leaks out to the cool air flow path with recess 69 of lower basket 64 as the center. Since mist atomizer 67 is arranged at an opposing position of recess 69, the cool air of high humidity from the interior of the basket can be efficiently collected and condensed in mist atomizer 67. The condensed water can be changed to a microscopic mist, and the microscopic mist of high diffusivity can be again returned into the basket, whereby the interior of the basket can be sufficiently humidified with the microscopic mist and the freshness of vegetables can be maintained.

Therefore, in the present embodiment, the cool air from the cool air outlet is introduced into the basket, and flowed out to the outside of the basket from an area proximate to mist atomizer 67 of the basket. The humidity in the basket that is delivered from the cool air inlet to the evaporator under normal circumstances can be efficiently collected and again returned to the basket by mist atomizer 67, whereby the interior of the basket is sufficiently humidified and the freshness of the vegetables can be maintained.

Furthermore, in the present embodiment, the cool air flow-out portion is arranged in the vicinity of mist atomizer 67, whereby the vicinity of mist atomizer 67 becomes high humidity due to the humidity from inside the basket, and the humidity can be efficiently condensed and collected.

In the present embodiment, the basket is configured by the upper basket and the lower basket, and the cool air flow-out portion is arranged at the gap of the upper basket and the lower basket. The humidity from the lower basket, where leaf vegetables etc. are often stored and where transpiration of moisture is great, is efficiently concentrated near mist atomizer 67 so as to be easily collected by mist atomizer 67.

Moreover, in the present embodiment, the recess is arranged at the upper end of the rear surface of the lower basket. A sealed accurate partition does not need to be formed, and the cool air flow-out portion can be configured with a simple configuration. Thus, the vicinity of mist atomizer 67 becomes high humidity due to the humidity in the lower basket, and the humidity can be efficiently collected by mist atomizer 67.

Mist atomizer 67 is arranged in the side of inlet for vegetable compartment 46 rather than center line 24b in the left and right direction of vegetable compartment 24. Center line 24b in the left and right direction is shown in the front view of FIG. 5. As mist atomizer 67 is arranged on inlet for vegetable compartment 46 side where the humidity is higher in the left and right direction, the humidity contained in the cool air can be efficiently collected and condensed by mist atomizer 67. Therefore, the interior of the basket can be sufficiently humidified with the microscopic mist and the freshness of the vegetables can be maintained.

In particular, if the damper positioned on upstream on the air duct of the cool air of outlet for vegetable compartment 45 for flowing in the cool air to vegetable compartment 24, which is a storage compartment, including mist atomizer 67 is closed, that is, if the cool air is not flowing in from outlet for vegetable compartment 45, the flow of the cool air from vegetable compartment 24 to inlet for vegetable compartment 46 generates, although by a small amount, even if the cool air is not flowing in from outlet for vegetable compartment 45 as the downstream side of inlet for vegetable compartment 46 or the downstream side on which the cool air of vegetable compartment 24 flows out is communicating to the downstream side of the air duct. In such state as well, inlet for vegetable compartment 46 side is in an atmosphere of higher humidity than center line 24b in the left and right direction of vegetable compartment 24, and an environment in which condensation can be more easily carried out near an atomizing device or the mist atomizer is obtained. As mist atomizer 67 is arranged in the side of inlet for vegetable compartment 46 rater than center line 24b in the left and right direction of vegetable compartment 24, the humidity contained in the cool air can be efficiently collected and condensed by mist atomizer 67, whereby the interior of the basket can be sufficiently humidified with the microscopic mist and the freshness of the vegetables can be maintained.

Therefore, in the present embodiment, the cool air from the cool air outlet (outlet for vegetable compartment 45) is introduced into the basket (lower basket 64, upper basket 65), and flowed out to the outside of the basket (lower basket 64, upper basket 65) from an area proximate to mist atomizer 67 of the basket (lower basket 64, upper basket 65). The humidity in the basket (lower basket 64, upper basket 65) that is delivered from the cool air inlet (inlet for vegetable compartment 46) to evaporator 30 under normal circumstances can be efficiently collected and again returned to the basket (lower basket 64, upper basket 65) by mist atomizer 67. Therefore, the interior of the basket (lower basket 64, upper basket 65) can be sufficiently humidified, and the freshness of the vegetables can be maintained.

Furthermore, in the present embodiment, the cool air flow-out portion of the basket (lower basket 64, upper basket 65) is arranged in the vicinity of mist atomizer 67, so that the vicinity of mist atomizer 67 becomes high humidity due to the humidity from inside the basket (mainly lower basket 64), and the humidity can be efficiently condensed and collected.

In the present embodiment, the basket is configured by upper basket 65 and lower basket 64, and the cool air flow-out portion is arranged at the gap of upper basket 65 and lower basket 64 (gap of upper basket 65 and lower basket 64 is the cool air flow-out portion). The humidity from lower basket 64, where leaf vegetables etc. are often stored and where transpiration of moisture is great, is efficiently concentrated near mist atomizer 67 so as to be easily collected by mist atomizer 67.

Moreover, in the present embodiment, recess 69 is arranged at the upper end of the rear surface of lower basket 64, where a sealed accurate partition does not need to be formed, and the cool air flow-out portion can be configured with a simple configuration. Thus, the vicinity of mist atomizer 67 becomes high humidity due to the humidity from inside lower basket 64, and the humidity can be efficiently collected by mist atomizer 67.

As wind direction rib 68 is continuously arranged in the left and right direction of mist atomizer 67, the cool air that flowed into lower basket 64 does not leak out from the left and right direction of mist atomizer 67 due to wind direction rib 68. Thus, the periphery of mist atomizer 67 becomes high humidity, and the humidity can be efficiently collected by mist atomizer 67, where the microscopic mist with microscopic diffusivity is again returned to lower basket 64 to thereby sufficiently humidify the interior of lower basket 64 and maintain the freshness of the vegetables.

Furthermore, since wind direction rib 68 is arranged on the upper side than the upper end of the basket on the side facing wind direction rib 68, the characteristic that the cold air flows to the lower side can be applied. A flow path can be formed in which the cool air of high humidity riding on the great amount of cool air that flowed in from outlet for vegetable compartment 45, which is the cool air outlet, has the direction changed by wind direction rib 68 arranged on the lower side, flows into the basket and circulates in the basket, and thereafter, flows out to the outside of the basket as the cool air of high humidity. The cool air is actively sent into the basket and then circulated, and then the humidity in the basket can be carried to the vicinity of mist atomizer 67, whereby the humidity is collected and returned to the basket by mist atomizer 67. The interior of the basket can be sufficiently humidified and the freshness of the vegetables can be maintained.

As described in the present embodiment, wind direction rib 68, which is the cool air introducing means, is continuously arranged at the side of mist atomizer 67. The cool air introduced into the basket (lower basket 64, upper basket 65) is circulated in the basket (lower basket 64, upper basket 65), and the humidity in the basket (lower basket 64, upper basket 65) can be carried to the vicinity of mist atomizer 67. The humidity can be collected and again returned to the basket (lower basket 64, upper basket 65) by mist atomizer 67, so that the interior of the basket (lower basket 64, upper basket 65) can be sufficiently humidified and the freshness of the vegetables can be maintained.

In the present embodiment, the basket is configured by upper basket 65 and lower basket 64, and the gap between upper basket 65 and lower basket 64 is widened at the vicinity of mist atomizer 67. The humidity from the interior of the basket (lower basket 64, upper basket 65) thus can be efficiently collected to the vicinity of mist atomizer 67, and condensed and collected by mist atomizer 67.

In the present embodiment, in first cooling duct 29 arranged in the storage compartment (vegetable compartment 24) and including the cool air outlet (outlet for vegetable compartment 45) and the cool air inlet (inlet for vegetable compartment 46), the cool air introducing means is configured by wind direction rib 68 integrally formed with first cooling duct 29. The direction of the flow of the cool air flowed out from the basket (lower basket 64, upper basket 65) is changed by wind direction rib 68 so that the cool air of high humidity is easily introduced to the vicinity of mist atomizer 67.

### (Seventh embodiment)

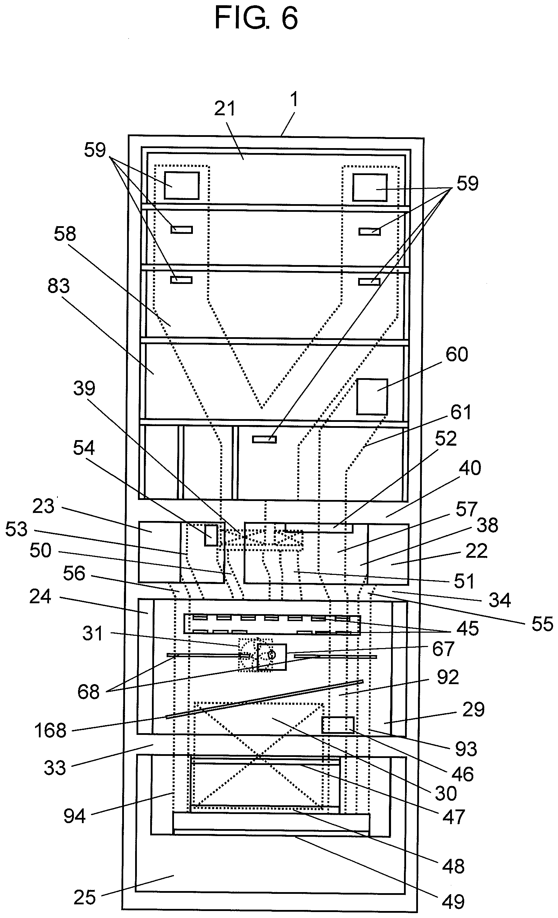

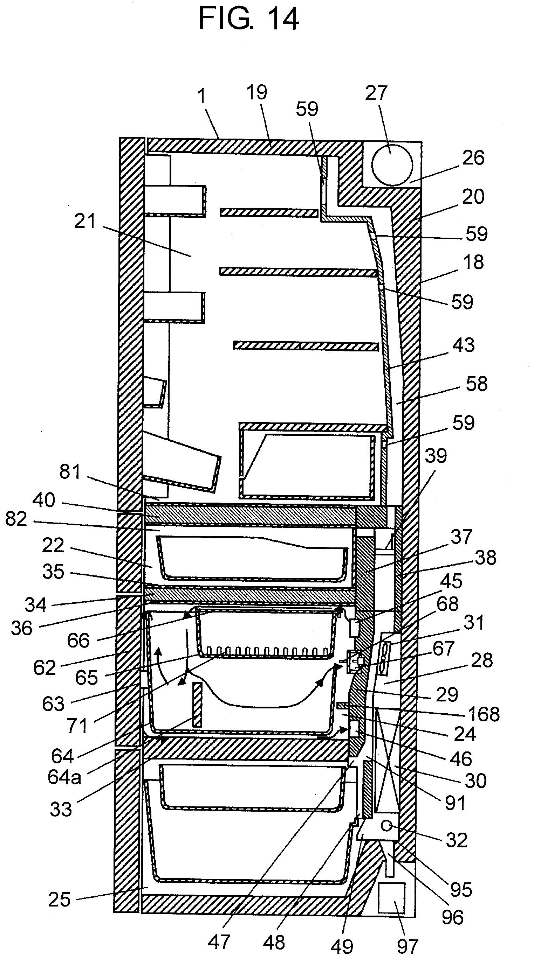

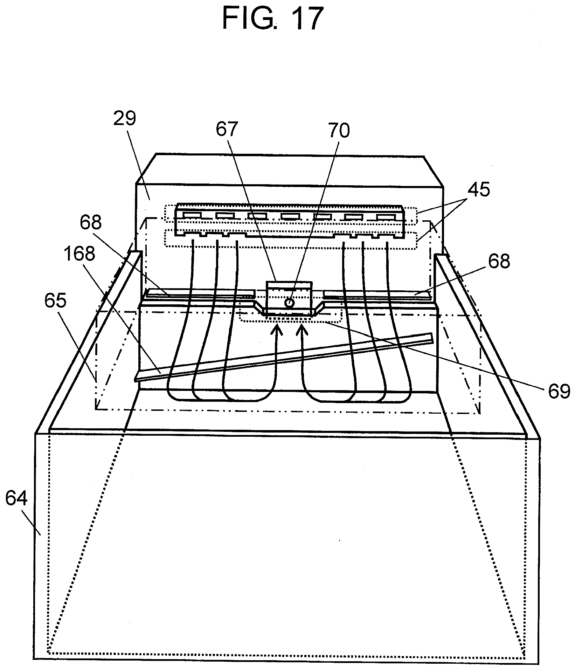

FIG. 6 is a front view according to a seventh embodiment of the present invention, showing a state in which the door is detached. FIG. 14 is a longitudinal cross-sectional view of the refrigerator according to the seventh embodiment of the present invention. In FIG. 6 and FIG. 14, the basic configuration is similar to FIG. 1 and FIG. 8 described in the first embodiment. The same components are denoted with the same reference numbers. The difference with the first embodiment lies in including wind direction auxiliary rib 168. FIG. 17 is a perspective view of the vegetable compartment in the seventh embodiment of the present invention.

Mist atomizer 67 is arranged at one part of first cooling duct 29, and is positioned near the gap between lower basket 64 and upper basket 65. Wind direction rib 68, which is a humidity introducing part, extending in a substantially horizontal direction to the left and the right of mist atomizer 67 is arranged at a rear surface wall side of vegetable compartment 24 of first cooling duct 29. Wind direction rib 68 is the humidity introducing part that is positioned at the same height as the upper end of the rear surface of lower basket 64 or is positioned on the upper side than the upper end of the rear surface of lower basket 64, and that partitions the space between upper basket 65, lower basket 64 and first cooling duct 29 to top and bottom. Wind direction auxiliary rib 168 that acts as a humidity collecting part is arranged on the lower side of wind direction rib 68 at first cooling duct 29. Wind direction auxiliary rib 168, which is a humidity collecting part, is continuously arranged in a form of inclining either to the left or the right at the position on the upper side of inlet for vegetable compartment 46, and partitions the space between lower basket 64 and first cooling duct 29 to top and bottom. Wind direction rib 68 and wind direction auxiliary rib 168, and upper basket 65 and lower basket 64 are provided with a space of an extent of not contacting each other when the door is opened or closed in the front and back direction.

Therefore, wind direction auxiliary rib 168, which is the humidity collecting part, is arranged on the lower side of the rear surface wall or the wall surface arranged with mist atomizer 67, and wind direction rib 68, which is the humidity introducing part, is arranged in the left and right direction of mist atomizer 67. Mist atomizer 67 is arranged in a space of the rear surface wall surrounded by wind direction rib 68 and wind direction auxiliary rib 168. Wind direction rib 68 and wind direction auxiliary rib 168 are integrally molded with first cooling duct 29 or the rear surface wall side of vegetable compartment 24.

In the present embodiment, wind direction rib 68 is positioned on the upper side than the upper end of the rear surface of lower basket 64, but may be at the same height as lower basket 64.

Recess 69 is arranged near mist atomizer 67 at one part of the upper end of the rear surface of lower basket 64, and is formed lower than the upper end of the rear surface of lower basket 64. The position of the top and bottom and the left and the right of recess 69 merely needs to be such that atomization port 70 of mist atomizer 67 is not hidden by the rear surface of lower basket 64. The cool air flow-out portion from basket is formed by recess 69 and the bottom surface of upper basket 65.

Part of the cool air that flows in from outlet for vegetable compartment 45 into vegetable compartment 24 is discharged to the lower side along the wall of first cooling duct 29 due to the characteristics that cold air flows to the lower side. Thereafter, the wind direction is changed by wind direction rib 68 integrally formed with first cooling duct 29 and arranged on the left and right of mist atomizer 67, and the cool air flows more or less towards the front side and does not flow to the lower side. Since wind direction rib 68 is positioned at the same height as or on the upper side of the upper end of the rear surface of lower basket 64, as described above, the cool air which wind direction is changed to the front side enters lower basket 64 from the gap of the bottom surface of upper basket 65 and the upper end of the rear surface of lower basket 64 and cools the stored food inside. However, this flow is one part, and the cooling of the stored food inside is carried out mainly from the portion passing between lid 66 and second partition 34 and entering the front portion of lower basket 64 from the front portion or door 62 side of upper basket 65.

If the cool air from outlet for vegetable compartment 45 is not flowing into vegetable compartment 24, the moisture transpires from the food stored inside lower basket 64 with elapse of time from when placed inside. In this case, the air containing the transpired moisture flows out to the outside of the basket from the cool air flow-out portion defined by recess 69 and the bottom surface of upper basket 65 along the flow of the cool air that flowed into lower basket 64. This air is wind direction changed by wind direction rib 68, which is the humidity introducing part, continuously arranged in the left and right direction of mist atomizer 67, and reaches the vicinity of mist atomizer 67. The interior of mist atomizer 67 is cooled to be lower than the ambient temperature by heat conduction from air duct 91 of an adjacent different partition, where the moisture in the air condenses inside mist atomizer 67. The condensed water is atomized in a mist-form from the cool air flow-out portion defined by recess 69 and the bottom surface of upper basket 65 to the interior of the basket. As a result, the transpired water from the stored food is again returned to the stored food itself by mist atomizer 67. Therefore, air duct 91, which is a cooling means, for cooling mist atomizer 67 needs to be a space through which the cool air of lower temperature zone than the storage compartment including mist atomizer 67 flows. The cooling means thus may use the cool air of the adjacent storage compartment of low temperature zone (e.g., freezing temperature zone) when air duct 91 is not used.

When the cool air is not flowing in from outlet for vegetable compartment 45, a damper is generally not arranged on the lower stream than inlet for vegetable compartment 46 even if a damper positioned on the upper stream than outlet for vegetable compartment 45 is closed. Thus the flow of cool air generates from inside lower basket 64, or the basket, towards inlet for vegetable compartment 46 although by a small amount. Since wind direction auxiliary rib 168 is arranged on the upper side of inlet for vegetable compartment 46, the air containing transpired moisture does not flow directly towards inlet for vegetable compartment 46 but is held in a space defined by wind direction rib 68 and wind direction auxiliary rib 168. Thus, the cool air of high humidity retains in the space defined by wind direction rib 68 and wind direction auxiliary rib 168 and is collected to the vicinity of mist atomizer 67, whereby the humidity can be easily collected by mist atomizer 67.

Since the position of mist atomizer 67 is the area where the wall surface in the height direction of lower basket 64 is the lowest and the location where the gap between the bottom surface of upper basket 65 and the upper end of the rear surface of lower basket 64 is the largest, the cool air of high humidity flows out from the cool air flow-out portion where the amount of flowing cool air is the greatest. Therefore, the periphery of mist atomizer 67 arranged in the vicinity of such cool air flow-out portion becomes an atmosphere of high humidity, and an environment in which the moisture in air easily condenses in the interior of mist atomizer 67 is realized.

Therefore, the humidity in lower basket 64 can be carried to the vicinity of mist atomizer 67 by wind direction rib 68, which is the humidity introducing part, arranged on the left and the right of mist atomizer 67. Furthermore, the mist particles that dropped to the lower side without being atomized into the basket of the mist atomized from mist atomizer 67 can be collected by wind direction auxiliary rib 168, which is the humidity collecting part, continuously arranged to the left and the right on the lower side of mist atomizer 67 and transpired into the air from position on the wind direction auxiliary rib 168. Thus, the humidity is collected and again returned to lower basket 64 by mist atomizer 67, and the interior of lower basket 64 can be sufficiently humidified and the freshness of the vegetables can be maintained. When the mist particles that dropped to the lower side from mist atomizer 67 evaporate by wind direction auxiliary rib 168, which is the humidity collecting part, condensation that occurs when water droplets by mist accumulate at the bottom surface of the vegetable compartment can be prevented.

As wind direction auxiliary rib 168, which is the humidity collecting part, is arranged in a shape inclined over the left and right direction, even if the water droplets drop on wind direction auxiliary rib 168, the water droplets can evaporate while moving down the inclination towards the lower side, whereby the water droplets accumulated at the wind direction auxiliary rib can be more reliably evaporated.

In the present embodiment, the flow of the cool air on the rear surface side of shortest distance connecting outlet for vegetable compartment 45 arranged on the rear surface side of the storage compartment and inlet for vegetable compartment 46 is shielded by a double rib of wind direction rib 68 and wind direction auxiliary rib 168. Thus, most of the dry cool air of relatively low temperature that flowed in from outlet for vegetable compartment 45 is prevented from flowing to the lower side and being discharged from inlet for vegetable compartment 46, but flows from the upper side to the front side on the rear surface side and direction changed by door 62 arranged on the front surface side, so that cold and dry cool air is introduced from the portion entering the front portion of lower basket 64. Therefore, beverages such as pet bottles stored on the front portion of lower basket 64 can be cooled with the cold dry cool air, and the cool air of relatively high humidity after passing lower basket 64 flows to the vicinity of upper basket 65 and mist atomizer 67. Thus, the humidity on the rear surface side can be made relatively higher than the near side, that is, door 62 side of vegetable compartment. Therefore, the periphery of mist atomizer 67 arranged on the rear surface side becomes an atmosphere of high humidity, and an environment in which the moisture in air easily condenses in the interior of mist atomizer 67 is realized.

Furthermore, feedback air duct for refrigerator compartment 92 communicating with inlet for vegetable compartment 46 on the downstream side where the cool air of vegetable compartment flows out generally converges with the air duct for cool air on the downstream side of another storage compartment, where greater amount of low temperature cool air always flows through the air duct on the downstream side of the storage compartment of the freezing temperature zone than the air duct on the downstream side of the storage compartment of the refrigerating temperature zone and thus the flow speed is fast thereat. The cool air of the storage compartment of the refrigerating temperature zone such as the vegetable compartment of the present embodiment is thus sometimes pulled. However, since the flow of the cool air on the rear surface side is physically shielded by double rib of wind direction rib 68 and wind direction auxiliary rib 168, which are ribs, as in the present embodiment, the humidity is prevented from lowering as the cool air on the rear surface side is pulled from inlet for vegetable compartment 46. In other words, even if inlet for vegetable compartment 46 or the downstream side where the cool air of the vegetable compartment flows out converges with the air duct on the downstream side of the storage compartment of the freezing temperature zone of lower temperature than the vegetable compartment, great amount of cool air positioned on the upper side than wind direction auxiliary rib 168 on the rear surface side of the vegetable compartment is prevented from flowing out from inlet for vegetable compartment 46, and the cool air positioned on the upper side than wind direction auxiliary rib 168 can be maintained at high humidity. Therefore, the periphery of mist atomizer 67 arranged on the rear surface side becomes an atmosphere of high humidity, and an environment in which the moisture in air easily condenses in the interior of mist atomizer 67 is realized.

Since wind direction rib 68, which is the humidity introducing part, can carry the humidity in the basket to the vicinity of mist atomizer 67, the interior of lower basket 64 can be sufficiently humidified by mist atomizer 67 and the freshness of the vegetables can be maintained.

The basket includes upper basket 65 and lower basket 64, and wind direction rib 68, which is the humidity introducing part, is arranged near the gap of the baskets, so that the humidity in lower basket 64 can be efficiently collected by mist atomizer 67. Humidity is again returned into lower basket 64 by the mist atomizing device, so that the interior of lower basket 64 can be sufficiently humidified and the freshness of the vegetables can be maintained.

The wind direction rib, which is the humidity introducing part, and wind direction auxiliary rib 168, which is the humidity collecting part, are arranged projecting out from the wall surface in vegetable compartment 24, so that the wind direction of the cool air can be changed with a simple structure, and the periphery of mist atomizer 67 becomes an atmosphere of high humidity with a physical structure of few failures and high reliability.

In this case, a heater etc. (not shown) is arranged on the lower side than at least wind direction 68, which is the humidity introducing part, of the rear surface wall inside vegetable compartment 24, and preferably on the lower side of wind direction auxiliary rib 168, which is the humidity collecting part. The rear surface wall is thus appropriately heated, and the mist particles diffused to the outside of the basket and the transpired water from the vegetables does not condense.

In particular, even if the mist particles dropped to the lower side from mist atomizer 67 are held by wind direction auxiliary rib 168, which is the humidity collecting part, and become water droplets, the water droplets evaporate with that which is arranged on the rear surface wall, whereby condensation caused by the water droplets by mist accumulating at the bottom surface of the vegetable compartment can be prevented. At the same time, the air of high humidity can flow towards mist atomizer 67 arranged on the upper side closer to wind direction auxiliary rib 168, the periphery of mist atomizer 67 becomes an atmosphere of high humidity, and an environment in which the moisture in air easily condenses in mist atomizer 67 can be realized.

Thus, the rising air current easily generates at the rear surface wall compared to other wall surfaces, where the humidity easily rises to the upper side on such rising air current, and the humidity can be carried to the vicinity of mist atomizer 67 without rising to the upper side by wind direction rib 68, which is the humidity introducing part. The humidity is collected and returned to the basket by mist atomizer 67, so that the interior of the basket can be sufficiently humidified and the freshness of the vegetables can be maintained.

Therefore, in the present embodiment, wind direction rib 68 serving as the humidity introducing part is arranged at the side of mist atomizer 67. The cool air introduced into the basket (lower basket 64, upper basket 65) can be circulated in the basket (lower basket 64, upper basket 65), and the humidity in the basket (lower basket 64, upper basket 65) can be carried to the vicinity of mist atomizer 67. The humidity can be collected and again returned to the basket (lower basket 64, upper basket 65) by mist atomizer 67, so that the interior of the basket (lower basket 64, upper basket 65) can be sufficiently humidified and the freshness of the vegetables can be maintained.

In the present embodiment, the basket is configured by upper basket 65 and lower basket 64, and the gap between upper basket 65 and lower basket 64 is widened at the vicinity of mist atomizer 67. The humidity from the basket (lower basket 64, upper basket 65) is efficiently collected to the vicinity of mist atomizer 67, and then the flow to the upper side is stopped by wind direction rib 68, which is the humidity introducing part, continuously arranged in the left and right direction of mist atomizer 67 so that the humidity can be collected to mist atomizer 67, and the humidity can be condensed and collected by mist atomizer 67.

In the present embodiment, in first cooling duct 29 arranged in the storage compartment (vegetable compartment 24) and including the cool air outlet (outlet for vegetable compartment 45) and the cool air inlet (inlet for vegetable compartment 46), the humidity introducing part is configured by wind direction rib 68 and wind direction auxiliary rib 168 integrally formed with first cooling duct 29. The flow of the cool air on the rear surface side of the cool air discharged from the cool air outlet (outlet for vegetable compartment 45) is shielded by a double rib or wind direction rib 68 and wind direction auxiliary rib 168, and thus most of the dry cool air of relatively low temperature that flowed in from outlet for vegetable compartment 45 is prevented from flowing to the lower side and being discharged from inlet for vegetable compartment 46. A space can be held at high humidity between wind direction rib 68 and wind direction auxiliary rib 168. The periphery of mist atomizer 67 becomes an atmosphere of high humidity, and an environment in which the moisture in air easily condenses in the interior of mist atomizer 67 is realized.

### (Eight embodiment)

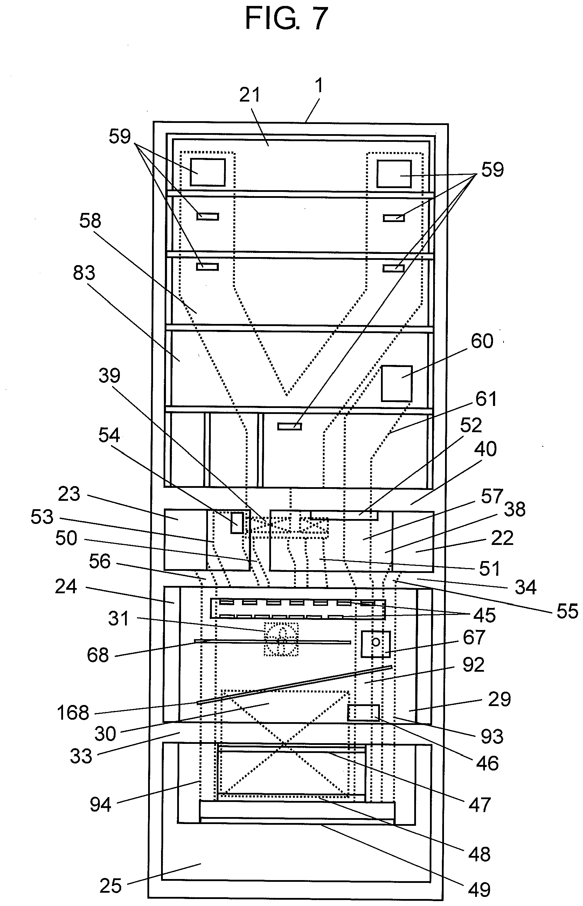

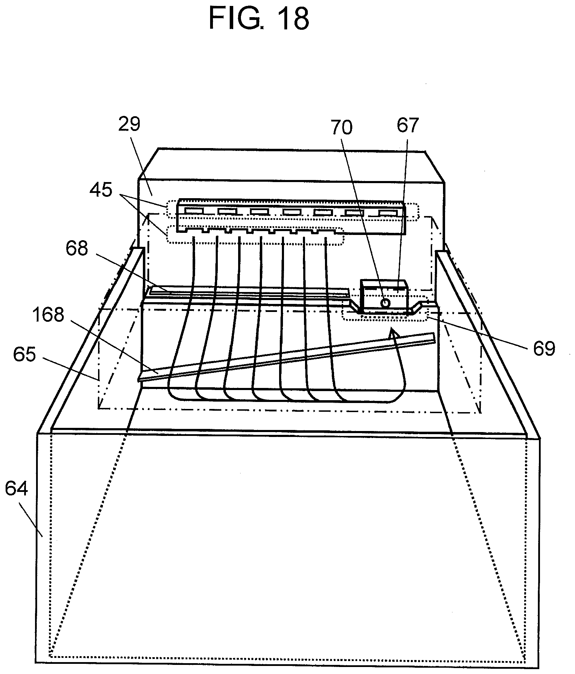

FIG. 7 is a front view according to an eighth embodiment of the present invention, showing a state in which the door is detached. FIG. 18 is a perspective view of the vegetable compartment according to the eighth embodiment of the present invention. In FIG. 7 and FIG. 18, the basic configuration is similar to FIG. 6 and FIG. 17 described in the seventh embodiment. The same components are denoted with the same reference numbers. The difference with the seventh embodiment lies in the position and the shape of mist atomizer 67 and wind direction rib 68.

Mist atomizer 67 is arranged at one part of first cooling duct 29, and is positioned near the gap between lower basket 64 and upper basket 65. Wind direction rib 68, which is the humidity introducing part, extending in a substantially horizontal direction to the left and the right of mist atomizer 67 is arranged at a rear surface wall side of vegetable compartment 24 of first cooling duct 29. Wind direction rib 68 is the humidity introducing part that is positioned at the same height as the upper end of the rear surface of lower basket 64 or is positioned on the upper side than the upper end of the rear surface of lower basket 64, and that partitions the space between upper basket 65, lower basket 64 and first cooling duct 29 to top and bottom. Wind direction auxiliary rib 168 that acts as a humidity collecting part is arranged on the lower side of wind direction rib 68 at first cooling duct 29. Wind direction auxiliary rib 168, which is the humidity collecting part, is continuously arranged in a form of inclining either to the left or the right at the position on the upper side of inlet for vegetable compartment 46, and partitions the space between lower basket 64 and first cooling duct 29 to top and bottom. Wind direction rib 68 and wind direction auxiliary rib 168, and upper basket 65 and lower basket 64 are provided with a space of an extent of not contacting each other when the door is opened or closed in the front and back direction.

In the present embodiment, wind direction rib 68 is arranged on the upper side than the upper end of the rear surface of lower basket 64, but may be the same height as lower basket 64. In the present embodiment, mist atomizer 67 is arranged on the right side of vegetable compartment 24 and wind direction rib 68 is arranged on the left side of mist atomizer 67, but the left and the right may be interchanged.

Therefore, wind direction auxiliary rib 168, which is the humidity collecting part, is arranged on the lower side of the rear surface wall or the wall surface arranged with mist atomizer 67 so as to be inclined in the left and right direction, and wind direction rib 68, which is the humidity introducing part, is arranged in the left and right direction of mist atomizer 67.. Mist atomizer 67 is arranged in a space of the rear surface wall, in which high humidity is maintained, surrounded by wind direction rib 68 and wind direction auxiliary rib 168.

Wind auxiliary rib 168 is inclined in the left and right direction, and the end positioned on the upper side is the side arranged with mist atomizer 67. Wind direction rib 68 and wind direction auxiliary rib 168 are integrally molded with first cooling duct 29 or the rear surface wall side of vegetable compartment 24.

As wind direction rib 68 is continuously arranged in the left and right direction of mist atomizer 67, the cool air in lower basket 64 does not leak out from the left and right direction of mist atomizer 67, the periphery of mist atomizer 67 becomes high humidity, and the humidity can be efficiently collected by mist atomizer 67. The interior of lower basket 64 can be sufficiently humidified and the freshness of the vegetables can be maintained by again returning the microscopic mist with microscopic diffusivity to lower basket 64.

Furthermore, the mist particles that dropped to the lower side without being atomized into the basket of the mist atomized from mist atomizer 67 can be collected by wind direction auxiliary rib 168, which is the humidity collecting part, continuously arranged to the left and the right on the lower side of mist atomizer 67 and transpired into the air from position on the wind direction auxiliary rib 168. Thus, the humidity is collected and again returned to lower basket 64 by mist atomizer 67, and the interior of lower basket 64 can be sufficiently humidified and the freshness of the vegetables can be maintained. When the mist particles that dropped to the lower side from mist atomizer 67 evaporate by wind direction auxiliary rib 168, which is the humidity collecting part, condensation that occurs when water droplets by mist accumulate at the bottom surface of the vegetable compartment can be prevented.

As wind direction auxiliary rib 168 is inclined in the left and right direction and the end positioned on the upper side is the side arranged with mist atomizer 67, even if the water droplets drop from mist atomizer 67 and accumulate on wind direction auxiliary rib 168, the water droplets can evaporate while sliding down the long path along the inclination. Therefore, the water droplets accumulated at wind direction auxiliary rib 168 can be more reliably evaporated.

The moisture transpires from the food stored inside lower basket 64 with elapse of time from when placed inside. In this case, the air containing the transpired moisture flows out to the outside of the basket from the cool air flow-out portion defined by recess 69 and the bottom surface of upper basket 65 along the flow of the cool air that flowed into lower basket 64, and reaches mist atomizer 67 arranged nearby. The interior of mist atomizer 67 is cooled to be lower than the ambient temperature by air duct 91, where the moisture in the air condenses inside mist atomizer 67. The condensed water is atomized in a mist-form from the cool air flow-out portion defined by recess 69 and the bottom surface of upper basket 65 to the interior of the basket. As a result, the transpired water from the stored food is again returned to the stored food itself by mist atomizer 67.

Inlet for vegetable compartment 46 positioned at the lowest stream of the cool air flowing through the vegetable compartment converges to feedback air duct for refrigerator compartment 92. As apparent from the series of operations, vegetable compartment 24 is cooled using the return cool air of refrigerator compartment 21. In this case, feedback air duct for refrigerator compartment 92 communicating with inlet for vegetable compartment 46 on the downstream side where the cool air of vegetable compartment flows out generally converges with the air duct for cool air on the downstream side of another storage compartment, where greater amount of low temperature cool air always flows through the air duct on the downstream side of the storage compartment of the freezing temperature zone than the air duct on the downstream side of the storage compartment of the refrigerating temperature zone. The flow speed is thus fast, and the cool air of the storage compartment of the refrigerating temperature zone such as the vegetable compartment of the present embodiment is sometimes pulled. However, since the flow of the cool air on the rear surface side is physically shielded by double rib of wind direction rib 68 and wind direction auxiliary rib 168, which are ribs, as in the present embodiment, the humidity is prevented from lowering as the cool air on the rear surface side is pulled from inlet for vegetable compartment 46.

In other words, even if inlet for vegetable compartment 46 or the downstream side where the cool air of the vegetable compartment flows out converges with the air duct on the downstream side of the storage compartment of the freezing temperature zone of lower temperature than the vegetable compartment, great amount of cool air positioned on the upper side than wind direction auxiliary rib 168 on the rear surface side of the vegetable compartment is prevented from flowing out from inlet for vegetable compartment 46, and the cool air positioned on the upper side than wind direction auxiliary rib 168 can be maintained at high humidity. Therefore, the periphery of mist atomizer 67 arranged on the rear surface side becomes an atmosphere of high humidity, and an environment in which the moisture in air easily condenses in the interior of mist atomizer 67 is realized.

Lid 66 closes the opening on the upper side of upper basket 65 to prevent the cool air from directly contacting and drying the stored food. Generally, beverages such as PET bottles are often placed in the space in the front and back direction of lower basket 64 and upper basket 65, that is, a space on the more forward side than lower storage partition 64a, where the cool air directly touches such portion and the cooling speed is ensured.

In the present embodiment, wind direction rib 68 serving as the humidity introducing part is continuously arranged at the side of mist atomizer 67. The cool air introduced into the basket (lower basket 64, upper basket 65) can be circulated in the basket (lower basket 64, upper basket 65), and the humidity in the basket (lower basket 64, upper basket 65) can be carried to the vicinity of mist atomizer 67. The humidity can be collected and again returned to the basket (lower basket 64, upper basket 65) by mist atomizer 67, so that the interior of the basket (lower basket 64, upper basket 65) can be sufficiently humidified and the freshness of the vegetables can be maintained.

In the present embodiment, the basket is configured by upper basket 65 and lower basket 64, and the gap between upper basket 65 and lower basket 64 is widened at the vicinity of mist atomizer 67. The humidity from the basket (lower basket 64, upper basket 65) is efficiently collected to the vicinity of mist atomizer 67, and then condensed and collected by mist atomizer 67.

In the present embodiment, in first cooling duct 29 arranged in the storage compartment (vegetable compartment 24) and including the cool air outlet (outlet for vegetable compartment 45) and the cool air inlet (inlet for vegetable compartment 46), the humidity introducing part is configured by wind direction rib 68 integrally formed with first cooling duct 29. The flow of the cool air flowed out from the basket (lower basket 64, upper basket 65) is direction changed by wind direction rib 68, so that the cool air of high humidity can be easily introduced to the vicinity of mist atomizer 67.

In the present embodiment, mist atomizer 67 is arranged on inlet for vegetable compartment 46 side than the center in the left and right direction of vegetable compartment 24. As mist atomizer 67 is arranged on inlet for vegetable compartment 46 side where humidity is higher in the left and right direction, the humidity contained in the cool air can be efficiently collected and condensed by mist atomizer 67, and thus the interior of the basket can be sufficiently humidified with the microscopic mist and the freshness of the vegetables can be maintained.

In particular, if the damper positioned on upstream on the air duct of the cool air of outlet for vegetable compartment 45 for flowing in the cool air to vegetable compartment 24, which is the storage compartment, including the atomizing device or the mist atomizer is closed, that is, if the cool air is not flowing in from outlet for vegetable compartment 45, the flow of the cool air from vegetable compartment 24 to inlet for vegetable compartment 46 generates, although by a small amount, even if the cool air is not flowing in from outlet for vegetable compartment 45 as the downstream side of inlet for vegetable compartment 46 or the downstream side on which the cool air of vegetable compartment 24 flows out is communicating to the downstream side of the air duct. Similar flow generates when rib is present although the amount of flowing cool air reduces. In such state as well, inlet for vegetable compartment 46 side is in an atmosphere of higer humidity than the center in the left and right direction of vegetable compartment 24, and an environment in which condensation can be easily carried out near mist atomizer 67 is obtained. As mist atomizer 67 is arranged on inlet for vegetable compartment 46 side rather than the center in the left and right direction of vegetable compartment 24, the humidity contained in the cool air can be efficiently collected and condensed by mist atomizer 67, whereby the interior of the basket can be sufficiently humidified with the microscopic mist and the freshness of the vegetables can be maintained.

As wind direction auxiliary rib 168 is inclined in the left and right direction and the end positioned on the upper side is the side arranged with mist atomizer 67, even if the water droplets drop from mist atomizer 67 and accumulate on wind direction auxiliary rib 168, the water droplets can evaporate while sliding down the long path along the inclination. Therefore, the water droplets accumulated at wind direction auxiliary rib 168 can be more reliably evaporated.

### (Ninth embodiment)

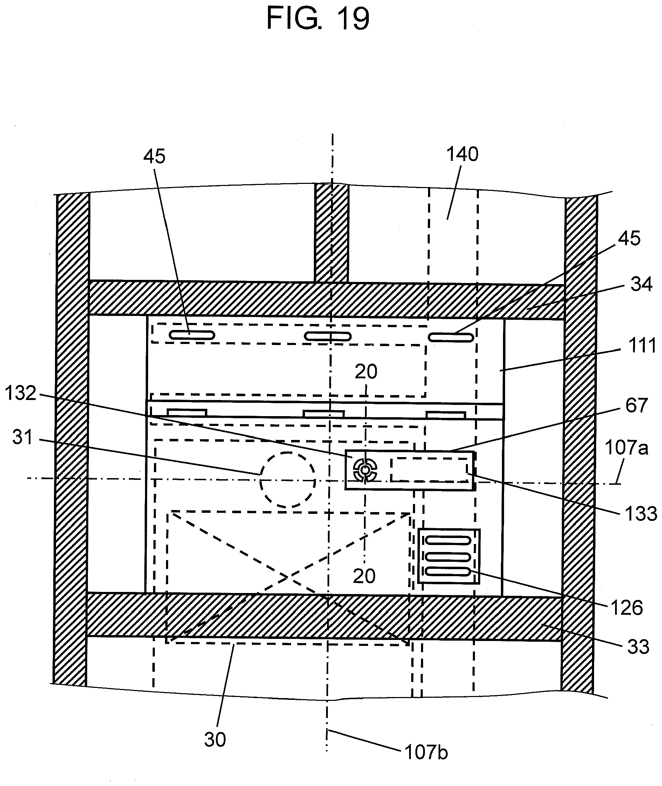

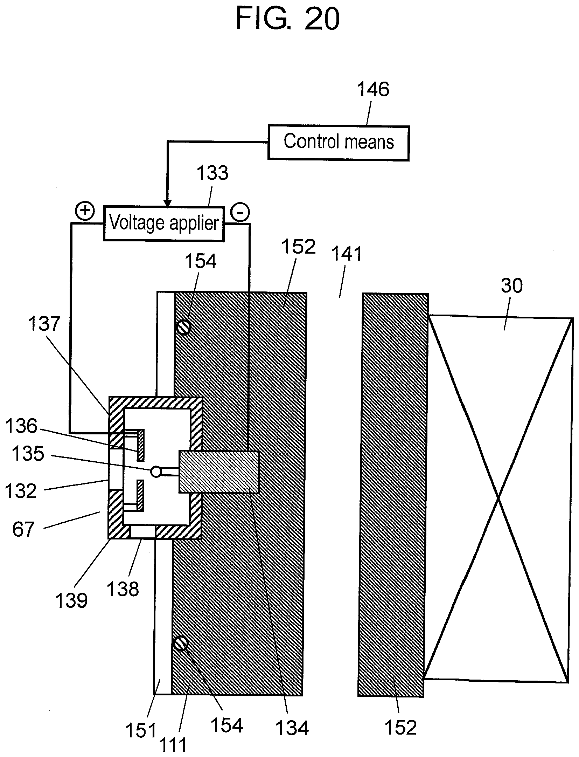

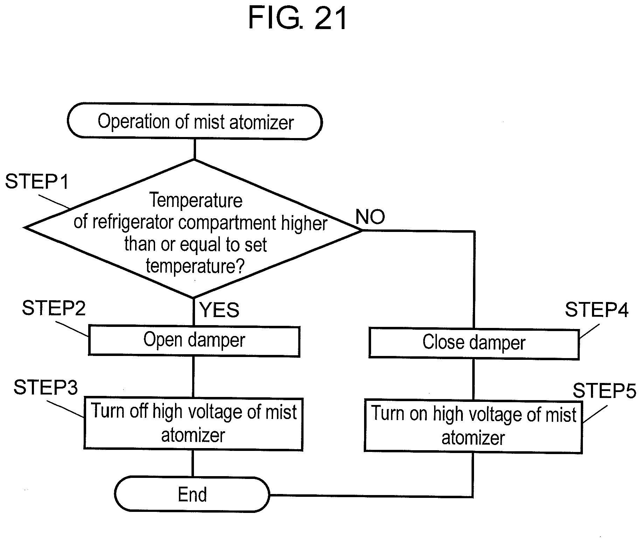

FIG. 19 is a perspective view of the vegetable compartment of the refrigerator according to the first embodiment of the present invention. FIG. 20 is a cross-sectional view showing the details of the vicinity of mist atomizer 67 taken along line 20-20 of FIG. 19. FIG. 21 is an operation flowchart of mist atomizer 67. The structure of the entire refrigerator is the same as the structure described in the first embodiment. Same reference numerals are denoted for the same elements in the figure. Refrigerator compartment 21 is normally between 1°C and 5°C with a temperature that does not freeze as a lower limit for refrigeration, and vegetable compartment 24 is has a temperature setting of between 2°C and 7°C, which is the same as or slightly higher than refrigerator compartment 21. Freezer compartment 25 is set to a freezing temperature zone, and is normally set to between -22°C and -15°C for frozen storage, but may be set to a low temperature of between -30°C and -25°C to enhance the frozen storage state. Switchable temperature compartment 22 can switch to a temperature zone set in advance between the refrigeration temperature zone and the freezing temperature zone other than the temperature zone for refrigeration set between 1°C and 5°C, vegetables set between 2°C and 7°C , and freezing normally set to between -22°C and -15°C. Switchable temperature compartment 22 is a storage compartment including an independent door provided next to icemaker 23, and often has a pull-out type door. In the present embodiment, switchable temperature compartment 22 is a storage compartment having the temperature zone of refrigeration and freezing, but may be a storage compartment specialized for switching only to the temperature zone between refrigeration and freezing, with refrigeration entrusted to refrigerator compartment 21 and vegetable compartment 24, and freezing entrusted to freezer compartment 25. It may be a storage compartment fixed at a specific temperature zone. Icemaker 23 makes ice with an automatic ice machine (not shown) provided at an upper part of the compartment with water fed from a water storage tank (not shown) in refrigerator compartment 21, and stores the same in ice storage container (not shown) arranged at the lower part of the compartment.

A roof surface portion of inner wall 19 has a shape provided with a step-wise recess towards the rear surface direction of the refrigerator, where machine compartment 26 is formed in the step-wise recess to accommodate configuring components on the high pressure side of the freezing cycle such as compressor 27, and drier (not shown) for removing moisture. In other words, the machine compartment arranged with compressor 27 is formed into a back region at the uppermost part in refrigerator compartment 21. The machine compartment is provided and compressor 27 is arranged in the back region of the storage compartment at the uppermost part of inner wall 19, which is a dead space the hand is difficult to reach. Thus, the space of the machine compartment that was at the lowermost part of inner wall 19 in the conventional refrigerator can be effectively transformed to a storage compartment capacity, thereby greatly improving the accommodating performance and the usability of the user.

The matters related to the main parts of the invention described below in the present embodiment may be applied to a refrigerator of a type in which the machine compartment is provided in the back region of a storage compartment at the lowermost part of inner wall 19, which was typical in the prior art, and compressor 27 is arranged therein.

Cooling compartment 28 is arranged on a rear surface of vegetable compartment 24 and freezer compartment 25, where conveying air duct of the cool air to each compartment having a heat insulating property and rear-end partition 111 configured to heat insulating partition with each chamber are formed in between. Evaporator 30 is arranged in cooling compartment 28, and cooling fan 31 for blowing the cool air cooled by evaporator 30 towards refrigerator compartment 21, switchable temperature compartment 22, icemaker 23, vegetable compartment 24, and freezer compartment 25 through the forced convection method is arranged in an upper space of evaporator 30. Radiant heater 32 made of glass tube for defrosting frost and ice attached to evaporator 30 and the periphery thereof in time of cooling is arranged in a lower space of evaporator 30. Drain pan 95 for receiving the defrosted water generated in time of defrosting and drain tube 86 passing from the deepest portion to the outside of the refrigerator are formed at the lower part, and evaporation tray 97 is formed at outside the refrigerator on the downstream side.

Lower basket 64 mounted on a frame attached to door 62 of vegetable compartment 24, and upper basket 65 mounted on lower basket 64 are arranged in vegetable compartment 24.

Lid 66 for mainly substantially hermetically closing upper basket 65 with door 62 closed is held by first partition 33 and inner wall 19 at the upper part of vegetable compartment 24. When door 62 is closed, lid 66 closely contacts the left and right sides and the far side of the upper surface of upper basket 65, and substantially closely contacts the front side of the upper surface. Furthermore, the boundary of the left and right lower sides of the rear surface of upper basket 65 and lower basket 64 fills the gap so that the humidity of food storage does not escape in a range of not contacting when upper basket 65 moves.

The air duct of the cool air discharged from outlet for vegetable compartment 45 formed at rear-end partition 111 is arranged between lid 66 and first partition 33. A space is also formed between lower basket 64 and second partition 34 to form the air duct for cool air. Inlet 126 for vegetable compartment 24 for returning the cool air that cooled vegetable compartment 24 and was heat exchanged to evaporator 30 is arranged at the lower part of rear-end partition 111 of the rear surface of vegetable compartment 24.

The matters related to the main parts of the invention described below in the present embodiment may be applied to a refrigerator of a type that opens and closes by a frame attached to the door and the rail provided on the inner wall, which was typical in the prior art.

Rear-end partition 111 is configured by rear-end partition surface 151 made of resin such as ABS, and heat insulator 152 made of foam polystyrene to separate the air duct and cooling compartment 28 and ensure heat insulating property. Recess is formed at one part of the wall surface on the inner side of the storage compartment of rear-end partition 111 so as to have a lower temperature than other locations, and mist atomizer 67 is embedded in the relevant location.

Damper 39 for adjusting the cool air for cooling each storage compartment is arranged at the air duct through which the cool air flows.

Mist atomizer 67 is mainly configured by mist generation department 139, voltage applier 133, and outlet wall 137, where atomization port 132 and cool air supply port 138 are formed at one part of outer wall 137.

Mist atomizer 67 or an atomizing device is arranged between outlet for vegetable compartment 45 and inlet for vegetable compartment 126 in the up and down direction in vegetable compartment 24.

Mist atomizer 67 or an atomizing device is arranged in vegetable compartment 24, where the cool air flows in through outlet for vegetable compartment 45, which is the cool air outlet, to which the cool air flows in from outside vegetable compartment 24 by opening damper 39 positioned on the upper stream than vegetable compartment 24 on the air duct of the cool air. As the cool air flows out to the outside of vegetable compartment 24 through inlet for vegetable compartment 126, which is the cool air inlet, at which the cool air is discharged from inside vegetable compartment 24 to the outside of vegetable compartment 24, a cool air flow path connecting outlet for vegetable compartment 45 and inlet for vegetable compartment 126 at a shortest distance forms in vegetable compartment 24. Mist atomizer 67 is arranged on cool air flow path.

Furthermore, in the present embodiment, outlet for vegetable compartment 45, which is the cool air outlet, is arranged on the upper side than mist atomizer 67 in the storage compartment including mist atomizer 67 or an atomizing device, and inlet for vegetable compartment 126, which is the cool air inlet, is arranged on the lower side than mist atomizer 67. The distance in the up and down direction of outlet for vegetable compartment 45 and mist atomizer 67 is shorter than the distance between inlet for vegetable compartment 126 and mist atomizer 67. In other words, mist atomizer 67 is arranged on the upper side close to outlet for vegetable compartment 45 in the up and down direction.

Furthermore, mist atomizer 67 is arranged on the upper part than center line 107a in the up and down direction of vegetable compartment 24. Mist atomizer 67 is arranged on inlet for vegetable compartment 126 side than center line 107b in the left and right direction of vegetable compartment 24.

Mist generation department 139 is installed with atomizing electrode 135, and atomizing electrode 135 is directly or indirectly fixed thermally to heat conduction pin 134, which is a satisfactory heat conducting member, made of aluminum, stainless and the like.

Heat conduction pin 134 is fixed to outlet wall 137 and heat conduction pin 134 itself is configured to project out from the outer shell. Doughnut disc-shaped opposite electrode 136 is attached on the storage compartment side at a position facing atomizing electrode 135 so as to maintain a constant distance with the distal end of atomizing electrode 135, and atomization port 132 is formed on the extension thereof.

Voltage applier 133 is formed near mist generation department 139, where a negative potential side of voltage applier 133 for generating high voltage is electrically connected to atomizing electrode 135 and a positive potential side is electrically connected to opposite electrode 136. For instance, atomizing electrode 135 is applied with ground voltage (0V) and opposite electrode 136 is applied with high voltage of between 4 to 10 kV.

Voltage applier 133 is communicated and controlled with controller 146 of refrigerator body 1, and turns ON/OFF the high voltage in response to an input signal from refrigerator body 1 or mist atomizer 67.

On rear-end partition surface 151 fixing mist atomizer 67, heater 154 and the like for temperature adjusting the storage compartment or preventing condensation of the surface and promoting drying is arranged at one part or over the entire region between rear-end partition surface 151 and heat insulator 152. One part of heater 154 is installed near mist atomizer 67 or the atomizing device.

The operation and the effects on the refrigerator 100 configured as above will now be described. First, the operation of the freezing cycle will be described. The freezing cycle operates and the cooling operation is carried out by a signal from a control substrate (not shown) according to the set temperature of the refrigerator. The cooling medium of high temperature and high pressure discharged by the operation of compressor 27 condenses and liquefies to a certain extent by a condenser (not shown), and the cooling medium condenses and liquefies while preventing condensation of the refrigerator body through the side surface and the rear surface of the refrigerator body, the cooling medium piping (not shown) arranged on the front surface opening of the refrigerator body, and the like, and reaches a capillary tube (not shown). Thereafter, in the capillary tube, it is depressurized while heat exchanging with the suction tube (not shown) to compressor 27 to thereby become a liquid cooling medium of low temperature and low pressure and reaches evaporator 30.

The liquid cooling medium of low temperature and low pressure is heat exchanged with air in each storage compartment such as outlet air duct 141 of the freezer compartment to be conveyed by the operation of cooling fan 31. The cooling medium in evaporator 30 is evaporated and vaporized. In this case, the cool air for cooling each storage compartment is generated in cooling compartment 28. The cool air of low temperature is divides the cool air from cooling fan 31 to refrigerator compartment 21, switchable temperature compartment 22, icemaker 23, vegetable compartment 24, and freezer compartment 25 using the air duct and damper 39 to cool each compartment to the target temperature zone.

Refrigerator compartment 21 has the amount of cool air adjusted by damper 39 and cooled to the target temperature zone by a temperature sensor (not illustrated) arranged in refrigerator compartment 21. In particular, vegetable compartment 24 is adjusted to be between 2°C and 7°C by distribution of cool air (not illustrated) and ON/OF operation, and generally does not have an in-refrigerator temperature detection means in most cases.

Vegetable compartment 24 cools refrigerator compartment 21, and discharges the air to vegetable compartment 24 from outlet for vegetable compartment 45 formed in the middle of feedback air duct for refrigerator compartment 92 for circulating the air to evaporator 30, and flows the air to the outer periphery of upper basket 65 and lower basket 64 to indirectly cool the same, and again returns to evaporator 30 from inlet 126 for vegetable compartment 24.

Heat insulator 152 is formed to have a wall thickness thinner than other locations with respect to one part of the location of relatively high humidity environment in rear-end partition 111. In particular, the thickness of the heat insulator behind heat conduction pin 134 is formed to about 2 mm to 10 mm. Rear-end partition 111 is thus formed with a recess, and mist atomizer 67 is attached to the relevant location.

At outlet air duct 141 of freezer compartment 25 on the rear surface of heat conduction pin 134, the cool air generated in evaporator 30 by the operation of the cooling system and is adjusted to about -15°C to -25C by cooling fan 31 flows, whereby heat conduction pin 134 is cooled to about 0°C to -10°C by the heat conduction from the surface of the air duct. In this case, since heat conduction pin 134 is a satisfactory heat conduction member, hot and cold can be very satisfactorily transmitted, whereby atomizing electrode 135 is also cooled to about 0°C to -10°C.

Since vegetable compartment 24 is between 2°C and 7°C and is in a relatively high humidity state due to the transpiration from vegetable and the like, atomizing electrode 135 becomes lower than or equal to a dew point temperature, and water generates and attaches to atomizing electrode 135 including the distal end. With atomizing electrode 135 attached with water droplets as the negative voltage side and opposite electrode 136 as the positive voltage side, high voltage (e.g., atomizing electrode 135 is 0V (GND, opposite electrode 136 is 4 to 10 kV)) is applied to between the electrodes by voltage applier 133. In this case, corona discharge occurs between the electrodes, where the water droplet condensed at the distal end of atomizing electrode 135 are made microscopic by the electrostatic energy, and microscopic mist of nano level having charges that cannot be visually recognized of a few nm level and ozone and OH radicals accompanied thereto generate by Rayleigh break-up as the liquid droplets are charged. The voltage to be applied between the electrodes is a very high voltage of between 4 and 10 kV, but the discharge current value at the time is a few pA level, and the input is a very low input of between 0.5 and 1.5 W.

Ion wind generates when the microscopic mist is atomized from atomizing electrode 135. In this case, high humidity air newly flows into mist generation department 139 from cool air supply port 138, and thus can be continuously atomized. Furthermore, the generated microscopic mist is atomized into lower basket 64 on ion wind and has diffusivity as the mist is a very small microscopic particle, and the microscopic mist also reaches upper basket 65. The microscopic mist to be atomized has negative charge as it is generated with high voltage discharge.

Green vegetables, fruits, and the like of the vegetables or vegetables and fruits are stored in vegetable compartment 24, and such vegetables and fruits easily rot by transpiration or transpiration during storage. Vegetables and fruits stored in vegetable compartment 24 normally include those that are slightly rotted by transpiration in purchase return, or transpiration during storage and have a positive charge. Thus, the atomized mist tends to gather at the surface of the vegetables, whereby the freshness preservation can be enhanced. The microscopic mist of nano level attached to the surface of the vegetable greatly contains OH radical and ozone, although by a very small amount, which has effects for sterilization, antibacterial, bacteria elimination, and in addition, causes vegetables to increase the nutritional elements such as vitamin C by agricultural chemical elimination by oxidation decomposition and antioxidation.

If water is not present at atomizing electrode 135, the discharge distance separates, an insulating layer of air cannot be broken, and the discharge phenomenon does not occur. Thus, current does not flow between atomizing electrode 135 and opposite electrode 136. The high voltage of voltage applier 133 can be turned ON/OFF by detecting such phenomenon with controller 146 of refrigerator 100.

Furthermore, since heat conduction pin 134 is normally cooled by the cool air of about -15°C to -25°C, condensation may occur in excess due to the environment in vegetable compartment 24. In the present embodiment, vegetable compartment 24 is cooled by the return air of refrigerator compartment 21. Refrigerator compartment 21 is controlled to be at the target temperature zone by damper 39, as described above. In other words, if the temperature of refrigerator compartment 21 is higher than the target temperature, damper 39 is opened for cooling. According to such operation, the relatively dry air of after cooling refrigerator compartment 21 flows into vegetable compartment 24 from outlet for vegetable compartment 45 through inlet air duct 140 of refrigerator compartment 21, and cools vegetable compartment 24. The water droplets excessively condensed at atomizing electrode 135 is dried using such dry air so that the condensed amount can be atomized. The control operation thereof will be described using the operation flowchart of the mist atomizer of FIG. 21.

First, whether or not refrigerator compartment 21 is high or low with respect to the set temperature is determined (step (STEP) 1). If high (YES), damper 39 is open operated to cool refrigerator compartment 21 (step 2). Here, relatively dry air or dry air of after cooling refrigerator compartment 21 flows into vegetable compartment 24 from outlet for vegetable compartment 45. The water droplets excessively condensed at atomizing electrode 135 is dried by such dry air. In other words, mist generation department 139 is dried by a drying means. In the present embodiment, the dry air refers to the air drier than the air of the storage compartment including mist generation department 139. For instance, in the case of the cool air of after cooling refrigerator compartment 21, the dry air such in which the temperature is generally 3°C, the relative humidity (obtained by dividing amount of water vapor contained in the atmosphere at a certain temperature (weight absolute humidity) by saturated water vapor amount at the relevant temperature) is about 30%, and the absolute humidity (indicating the amount of water vapor contained in unit weight of the dry air by weight) has a very small moisture amount of 0.00140 kg/kg. The air (cool air) near mist generation department 139 has a temperature of 1°C and the relative humidity of about 80 to 100%, and thus the absolute humidity when the relative humidity is 100% is assumed to be 0.00406 kg/kg.

Therefore, when the dry air flows to the vicinity of mist generation department 139, the absolute humidity near the atomizing electrode lowers, and evaporation is promoted in the water droplets attached to the atomizing electrode to obtain an equilibrium state at the boundary. When using the dry air for the drying means, the drying is promoted the greater the difference of the absolute humidity, and the dry air can be used as the drying means if the absolute humidity near mist generation department 139 with respect to at least the dry air is greater than or equal to two times, and desirably greater than or equal to three times.

During the drying operation, the high voltage application to mist atomizer 67 is turned OFF (OFF), and condensation to mist generation department 139 is not performed (step 3). If the set temperature is low (NO), damper 39 is closed to suppress the cooling of refrigerator compartment 21 (step 4). In this case, since the cold air does not flow into vegetable compartment 24, high humidity environment is obtained by the transpiration from the vegetables etc. stored in vegetable compartment 24, where during such operation, high voltage application to mist atomizer 67 is turned ON (step 5), so that atomizing electrode 135 is cooled, condensation occurs at the distal end, atomizing start, and mist atomization is performed.

Therefore, mist generation department 139 repeatedly performs the mist atomization of atomizing the mist to the storage compartment and the drying performed by the drying means, that is, the drying of mist generation department 139 is always performed by the drying means before mist generation department 139 performs mist atomization. Therefore, since mist generation department 139 is always dry before atomization, excessive condensation is prevented and the mist of a more stable atomization amount can be atomized, thereby providing a user-friendly refrigerator that prevents in-refrigerator condensation and enhances freshness preservation.

The atomization can be performed stably and as necessary by controlling the ON/OFF of the high voltage application to mist atomizer 67 according to the condensation state of atomizing electrode 135. Furthermore, power consumption can be suppressed.

Lid 66 closes the opening on the upper side of upper basket 65 to prevent the cool air from directly contacting and drying the stored food. Generally, beverages such as PET bottles are often placed in the space in the front and back direction of lower basket 64 and upper basket 65, where the cool air directly touches such portion and the cooling speed is ensured.

Mist atomizer 67 is cooled such that mist generation department 139 becomes lower than the dew point temperature, and is configured so that the moisture in air condenses at mist generation department 139. The condensed water is changed to the microscopic mist by mist generation department 139, and diffused into the basket from the gap of lower basket 64 and upper basket 65 positioned on the lower side of mist atomizer 67.

Part of the cool air that flowed in from outlet for vegetable compartment 45 is discharged from inlet for vegetable compartment 126 through the rear surface of lower basket 64 and upper basket 65. The cool air or the dry air that flowed in from outlet for vegetable compartment 45 flows to the lower side along the rear surface of the basket, and mist atomizer 67 is arranged in the cool air flow path connecting with inlet for vegetable compartment 126 and outlet for vegetable compartment 45 in the shortest path. Therefore, if the cool air is flowing in from outlet for vegetable compartment 45, the dry air or the relatively dried cool air, which is the drying means, flows through the periphery of the atomizing device.

In the present embodiment, mist atomizer 67 is arranged between outlet for vegetable compartment 45 and inlet for vegetable compartment 126 in the up and down direction in vegetable compartment 24. As the cool air flows in through outlet for vegetable compartment 45, which is the cool air outlet, from the outside of vegetable compartment 24, and as the cool air flows out to the outside of vegetable compartment 24 through inlet for vegetable compartment 126, which is the cool air inlet, the cool air flow path connecting with inlet for vegetable compartment 126 and outlet for vegetable compartment 45 in the shortest path forms in vegetable compartment 24. Mist atomizer 67 is arranged on the cool air flow path where the amount of cool air flowing through vegetable compartment 24 is great.

Since the amount of flowing cool air is large at the cool air flow path where the cool air that flowed into the storage compartment from outlet for vegetable compartment 45 flows to the outside of vegetable compartment 24 through inlet for vegetable compartment 126, the flow speed of the cool air becomes relatively fast, and mist generation department 139 of mist atomizer 67 can be dried by the relatively dried cool air that flowed into the storage compartment from outlet for vegetable compartment 45. In other words, the cool air is the drying means.

Furthermore, in the present embodiment, outlet for vegetable compartment 45, which is the cool air outlet, is arranged on the upper side than mist atomizer 67 in storage compartment 24 including mist atomizer 67. Inlet for vegetable compartment 126, which is the cool air inlet, is arranged on the lower side than mist atomizer 67. The distance in the up and down direction of outlet for vegetable compartment 45 and mist atomizer 67 is shorter than the distance between inlet for vegetable compartment 126 and mist atomizer 67. In other words, mist atomizer 67 is arranged on the upper side close to outlet for vegetable compartment 45 in the up and down direction.

The microscopic mist generated in mist atomizer 67 can ride on the flow of the great amount of cool air that flowed in from outlet for vegetable compartment 45, and mist generation department 139 of the atomizing device can be more effectively dried by arranging mist atomizer 67 on the side close to outlet for vegetable compartment 45, which is the cool air outlet, in the up and down direction.

Mist atomizer 67 is arranged on center line 107a in the up and down direction or on the upper side than center line 107a in the up and down direction of vegetable compartment 24 in vegetable compartment 24 including mist atomizer 67. Thus, the microscopic mist generated in mist atomizer 67 from the upper side can ride on the flow of the cool air flowing through vegetable compartment 24 by applying the characteristics that the cold air flows to the lower side. As the relatively dried cool air that flowed in from outlet for vegetable compartment 45, which is the cool air outlet, flows at the periphery of the atomizing device before becoming high humidity in vegetable compartment 24 by arranging the atomizing device on the more upstream side of the cool air flowing through vegetable compartment 24, the dried cool air becomes a more effective drying means.

Mist atomizer 67 is arranged on inlet for vegetable compartment 126 side than center line 107b in the left and right direction of vegetable compartment 24. By arranging mist atomizer 67 on inlet for vegetable compartment 126 side where the flow of the cool air becomes greater in the left and right direction, the flow speed of the cool air becomes relatively fast since the amount of flowing cool air is great, and at a situation that the cool air flows into the storage compartment from outlet for vegetable compartment 45, mist generation department 139 of mist atomizer 67 can be more efficiently dried by the relatively dried cool air. In other words, the cool air is the drying means.

In the present embodiment, description has been made that control is performed to turn OFF the high voltage application to mist atomizer 67 when damper 39 is opened, but the present embodiment is not limited to such control. For instance, when the outside air temperature is detected and the outside air temperature is a relatively high temperature, the opening operation of damper 39 relatively increases and thus vegetable compartment 24 becomes difficult to be in high humidity. In such case, the operation of actively atomizing the condensed water droplets by turning ON the application of the high voltage is preferable. If the outside air temperature is relatively low, damper 39 is often in the closed state, and atomizing electrode 135 tends to easily be in the excessive condensation state, and thus the high voltage application operation may be performed and mist atomizer 67 may be performed by the operation of compressor 27.

In the present embodiment, description has been made that the drying means for drying the excessive condensation of atomizing electrode 135 is the dry air, but heater etc. for preventing excessive condensation may be used as the drying means on the rear surface of mist atomizer 67. For instance, even in the operation state where the dry air is difficult to enter such as in time of low outside temperature or when the cooling of the storage compartment is not necessary, mist generation department 139 can be dried at an arbitrary timing irrespective of the operation state. Furthermore, the condensation state of atomizing electrode 135 can be stabilized. Therefore, mist generation department 139 can be more stably dried by using the dry air in combination for the drying means, thereby preventing excessive condensation.

In the present embodiment, damper 39 is used to dry atomizing electrode 135, but a means for actively promoting the drying of mist generation department 139 with a dedicated fan to cool each storage compartment may be used. In this case, the high voltage application control to mist atomizer 67 can be performed by the operation of such fan, and similar effects can be obtained.

In the present embodiment, the air duct for cooling the heat conduction pin is the outlet air duct for freezer compartment, but may be a low temperature duct such as the outlet air duct of the icemaker and the return air duct of the freezer compartment. Thus, the installable area of mist atomizer 67 enlarges.

In the present embodiment, a water retaining material is not arranged at the periphery of atomizing electrode 135 of mist atomizer 67, but the water retaining material may be arranged. The condensation water generated near atomizing electrode 135 thus can be held at the periphery of atomizing electrode 135, and can be appropriately supplied to atomizing electrode 135.

In the present embodiment, the storage compartment of the refrigerator is vegetable compartment 24, but may be a storage compartment of other temperature zones such as refrigerator compartment 21 and switchable temperature compartment 22, in which case various applications can be developed.

In the present embodiment, the negative potential side of voltage applier 133 for generating high voltage is electrically connected to atomizing electrode 135, and the positive potential side is electrically connected to opposite electrode 136, but a high voltage of -4 to -10 kV may be applied to atomizing electrode 135 and ground (0V) to opposite electrode 136. In this case, the generated microscopic mist contains greater amount of OH radicals, the oxidation power of which can remove the odor in the vegetable compartment, and can provide antibacterial property and sterilization to the surface of the vegetables, and at the same time, oxidation decompose and remove the harmful substances such as agricultural chemicals and wax attached to the surface of the vegetables.

In the present embodiment, the heat conduction from the air duct through which the cool air for cooling each storage compartment generated in the evaporator flows is used for the cooling means, but a means for cooling using the Peltier element can also be considered. In this case, the dry air can be used for the drying means, similar to the first embodiment. However, using the characteristics of the Peltier element, the cooling surface can be operated as the heating surface by inverting the input, and thus drying can be carried out by heating the heat conduction pin. Thus, the cycle of the condensation and the drying can be more stably controlled.

Furthermore, in the present embodiment, the cooling means for having atomizing electrode 135 to lower than or equal to the dew point temperature is configured, and the moisture in the air is condensed in atomizing electrode 135. Therefore, condensation easily and reliably can be occurred in the atomizing electrode from the excessive water vapor in the storage compartment. Thus, the microscopic mist of nano level generates by the corona discharge of high voltage with respect to opposite electrode 136, and atomized and sprayed microscopic mist evenly attaches to the surface of vegetables and fruits such as vegetables thereby suppressing the transpiration from the fruits and vegetables, and enhancing freshness preservation. The moisture penetrates into the cells from cellular intervals and air holes at the surface of fruits and vegetables and is supplied to the rotted cells to recover the cell to a crispy state.

Since discharge occurs between atomizing electrode 135 and opposite electrode 136, the atomization direction can be defined by stably building the electric field, and the microscopic mist can be more easily atomized into the basket.

Effects such as removal of odor, removal of harmful substances, and prevention of dirt by ozone and OH radicals generated at the same time as the mist generation can be enhanced.

The atomized mist can be directly atomized to the food in the vegetable crisper, and the mist can be attached to the surface of the vegetables using mist and the potential of the vegetables, whereby the efficiency of preserving freshness is satisfactory.

Furthermore, the water storage tank etc. is unnecessary since the excessive water vapor in the storage compartment is condensed in the atomizing electrode, the water droplets are attached, and the mist is atomized, and since water feeding means such as pump and capillary is not used, it can be inexpensively configured.

Since condensation water is used instead of tap water, and since mineral components and impurities do not exist, degradation of when using water retaining material, or degradation in water retention property due to clogging can be prevented,

In the present embodiment, water storage tank is unnecessary as it is not ultrasonic spraying by ultrasonic vibration, and the temperature influence of the inside of the refrigerator is small as the input is small. Furthermore, since excessive mist is not atomized to hold the interior of the refrigerator at high humidity, excessive condensation is suppressed from being generated in the case.

Furthermore, since the portion accommodating voltage applier 133 is embedded in the rear-end partition and cooled, the temperature rise of the substrate can be suppressed. The temperature influence of the inside of the storage compartment thus can be reduced.

In the present embodiment, an evaporator for cooling each storage compartment, and a partition for heat insulating partitioning the evaporator and the storage compartment are arranged, and mist atomizer 67 is attached to the partition. Thus, the accommodating capacity is not reduced by installing in the gap of the storage compartment, and it can not be easily touched by the hand of a human by being attached to the rear end, and thus the safety enhances.

In the present embodiment, the cooling means for cooling the atomizing electrode of mist atomizer 67 and condensing the same is a metal piece having satisfactory heat conductivity, and the means for cooling the metal piece is the heat conduction from the air duct through which the cool air generated by the evaporator flows. Thus, the temperature of the heat conduction pin and the atomizing electrode can be easily set by adjusting the wall thickness of the heat insulator, and the cool air of cool temperature does not leak out by sandwiching the heat insulator, and thus frost attachment, condensation, and the like of the outer shell of the case can be prevented.

In the present embodiment, the partition attached with mist atomizer 67 has a recess at one part on the storage compartment side, where a metal piece or a cooling means of mist atomizer 67 is inserted thereto. Therefore, the storage amount of storing fruits and vegetables, and food is not influenced, the metal piece is reliably cooled, and with respect to other portions the wall thickness for ensuring the heat insulating property can be ensured, and thus condensation in the case can be prevented, and the reliability can be enhanced.

The ozone also generates when generating microscopic mist. The ozone concentration in the storage compartment can be adjusted by the ON/OFF operation of mist atomizer 67. Degradation such as etiolation of vegetables due to overplus of ozone can be prevented and sterilization and antibacterial effects of the surface of the vegetables can be enhanced by appropriately adjusting the ozone concentration.

### (Tenth embodiment)

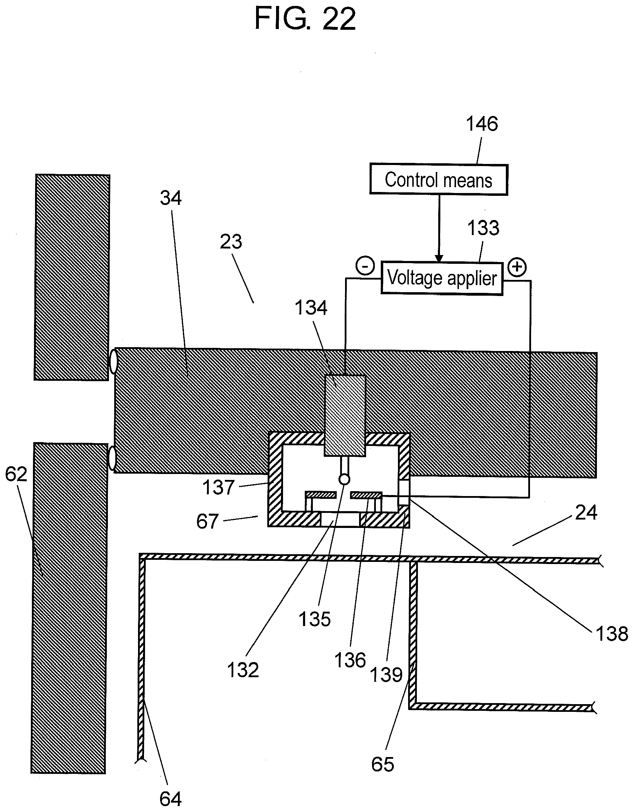

FIG. 22 is a cross-sectional view of the vicinity of the vegetable compartment of the refrigerator according to the tenth embodiment of the present invention. Same reference numerals are denoted for the configurations same as the ninth embodiment, and the detailed description thereof will be omitted. Other embodiments and effects in the tenth embodiment that are similar to or can be applied with the ninth embodiment will be omitted.

As shown in FIG. 22, mist atomizer 67 is incorporated in second partition 34 ensuring heat insulating property to partition the temperature zone of vegetable compartment 24 and icemaker 23, and in particular, the heat insulator has a recessed shape with respect to heat conduction pin 134 or mist generation department 139.

The operations and effects of the refrigerator configured as above will be described below. The thickness of second partition 34 installed with mist atomizer 67 requires cooling performance for cooling heat conduction pin 134 thermally fixed, directly or indirectly, with atomizing electrode 135. The wall thickness of the location arranged with mist atomizer 67 is formed thinner than other portions. Thus, heat conduction pin 134 is cooled by the heat conduction from icemaker 23 of relatively low temperature, and atomizing electrode 135 can be cooled. If the distal end temperature of atomizing electrode 135 is lower than or equal to dew point temperature, the water vapor near atomizing electrode 135 condenses at atomizing electrode 135, and water droplets are reliably generated.

Since heat conduction pin 134 is constantly cooled by heat conduction of the cool air of about -15° to -20°C from icemaker 23 of relatively low temperature, condensation may excessively occur due to the environment in vegetable compartment 24. In the present embodiment, vegetable compartment 24 is cooled by the return air of refrigerator compartment 21. Refrigerator compartment 21 is controlled to be the target temperature zone by damper 39. In other words, refrigerator compartment 21 is cooled by opening damper 39 if higher than the target temperature. According to the operation, the relatively dry air of after cooling refrigerator compartment 21 thus flows into vegetable compartment 24 from outlet for vegetable compartment 45 through inlet air duct 140 of refrigerator compartment 21, thereby cooling vegetable compartment 24. The water droplets excessively condensed at atomizing electrode 135 is dried using such dry air so that the condensation amount is in an atomizing state. The control operation is similar to the ninth embodiment, and thus the details will be omitted.

Although not illustrated, the dew point temperature can be more accurately obtained according to the change under an in-refrigerator environment through a predefined calculation by installing an in-refrigerator temperature detector, an in-refrigerator humidity detector, and the like in the refrigerator.

The high voltage (e.g., 7.5 kV) is applied between the electrodes by voltage applier 133 in such state with atomizing electrode 135 as the negative voltage side and opposite electrode 136 as the positive voltage side. In this case, the air insulating layer breaks between the electrodes and corona discharge occurs, the water of atomizing electrode 135 is atomized from the distal end of the electrode, and the microscopic mist of nano level with charge of less than 1 pm that cannot be visually recognized as well as ozone, OH radical etc. accompanied therewith are generated.

The generated microscopic mist is atomized into vegetable compartment 24. The microscopic mist atomized from mist atomizer 67 has negative charge. Vegetables, or fruits and vegetables, are stored in vegetable compartment 24, and green vegetables and fruits are stored as well. Such vegetables and fruits are normally stored in a slightly rotted state by transpiration in purchase return or transpiration during storage. Such fruits and vegetables are normally charged to a positive charge, and the atomized microscopic mist having negative charge tends to gather at the surface of the vegetables. Thus, the atomized microscopic mist again enables the interior of vegetable compartment 24 to be at high humidity and at the same time attaches to the surface of fruits and vegetables, thereby suppressing transpiration from the fruits and vegetables and enhancing freshness preservation. Penetrating into the cells from cellular intervals of fruits and vegetables, the moisture transpires and is again supplied to the rotted cells, so that the rotting is resolved by the turgor pressure of cells and a fresh state is restored.

The generated microscopic mist holds ozone, OH radical, and the like, which hold strong oxidative force. Thus, the generated microscopic mist can remove odor in vegetable compartment 24, and antibacterial and sterilization effects can be provided to the surface of the vegetables, and at the same time, the harmful substances such as agricultural chemical and wax attached to the surface of the vegetables can be oxidation decomposed and removed.

Presently, the mainstream of the cooling medium of the freezing cycle is that which uses isobutane having small global warming coefficient from the standpoint of conserving earth environment. The isobutane or carbon hydride has a specific gravity of about two times under atmospheric pressure (2.04, 300 K) is compared to air at normal temperature. If isobutane leaks out from the freezing system when compressor 27 is stopped, isobutane leaks to the lower side since it is heavier than air. In this case, the cooling medium has a possibility of leaking into the refrigerator from rear-end partition 111. In particular, when leaking out from evaporator 30 where the accumulation amount of the cooling medium is large, the leakage amount has a possibility of increasing, where vegetable compartment 24 equipped with mist atomizer 67 is installed above evaporator 30, and thus does not leak into vegetable compartment 24 even if leakage occurs.

Even if leaked to vegetable compartment 24, the cooling medium accumulates at the lower part of the storage compartment as it is heavier than air. Mist atomizer 67 is installed on the top surface of the storage compartment, and thus the possibility the vicinity of mist atomizer 67 becomes a combustible concentration is very low.

Therefore, the present embodiment includes a partition for partitioning the storage compartment and a low temperature storage compartment at the top surface side of the storage compartment, and mist atomizer 67 is attached to the partition of the top surface. Thus, when if the storage compartment of the freezing temperature zone such as the freezer compartment and the icemaker is at the upper part, it is installed at the partition of the top surface partitioning the same, and the atomizing electrode of mist atomizer 67 is cooled and condensed with the cooling source. Therefore, a special cooling device is unnecessary, and it can be atomized from the top surface and thus can be diffused to the entire basket, and safety enhances as it is less likely to be touched by the hand of a person.

The mist generation department of the present embodiment generates mist through electrostatic atomization method, and breaks and segmentalizes the water droplets using electrical energy such as high voltage to generate microscopic mist. Since the generated mist is charged, attachment force to vegetables and fruits can be enhanced by providing a charge opposite to an object to be attached such as vegetables and fruits to the mist, for example, atomizing mist charged with negative charge with respect to the vegetables having a positive charge. The mist is more evenly attached to the surface of the vegetables and the attachment rate of the mist can be enhanced compared to the mist of the uncharged type. The atomized microscopic mist can be directly atomized to food in the vegetable crisper, and the microscopic mist can be attached to the surface of the vegetables using the microscopic mist and the potential of the vegetables, whereby the freshness preservation can be enhanced.

Furthermore, the makeup water of the present embodiment uses condensation instead the tap water supplied from the outside. The mineral components and impurities thus do not exist, and degradation of the distal end of the atomizing electrode and degradation in water retention property due to clogging can be prevented,

Furthermore, as the mist of the present embodiment contains radical, agricultural chemicals, wax and the like attached to the surface of the vegetables can be decomposed and removed with very small amount of water, whereby water can be saved and lower input can be achieved.

The present embodiment includes a wind amount adjustment means for adjusting the wind amount of the dry air, where mist atomizer 67 can determine high voltage application of the voltage applier in conjunction with the opening/closing operation of the wind amount adjustment means, and the water droplets attached to the mist generation department (atomizing electrode) can be dried without using a new drying means. Thus, the water vapor in the storage compartment to be condensed at the mist generation department (atomizing electrode) can be easily and reliably condensed at the mist generation department (atomizing electrode) and the condensation amount can be adjusted so that atomization is stably and continuously carried out. Since a new cooling means is not used, it can be inexpensively and easily configured.

Mist generation department 139 may determine the high voltage application of voltage applier in conjunction with the opening/closing operation of damper 39. Thus, if water droplets are not present at mist generation department 139 (atomizing electrode 135), or if excessively condensed, high voltage application may be prevented until an atomizable condensation state is realized, and thus extra power can be suppressed.

The mist generation department may determine the high voltage application of voltage applier 133 in conjunction with the operation of cooling fan 31 with cooling fan 31 for conveying the cool air to each storage compartment from evaporator 30 for cooling the storage compartment. Thus, if water droplets are not present at mist generation department 139 (atomizing electrode 135), or if excessively condensed, high voltage application may be prevented until an atomizable condensation state is realized, and thus extra power can be suppressed.

### INDUSTRIAL APPLICABILITY

The refrigerator according to the present invention sufficiently humidifies the interior of the basket and maintains the freshness of the stored food by efficiently collecting and re-atomizing the humidity from the stored food. Not limited to home refrigerator, application can be made to industrial refrigerator, food storage, and refrigerator truck.

## Claims

1. A refrigerator comprising a heat insulating partitioned storage compartment (24), a basket (64, 65) arranged in the storage compartment, a mist atomizer (67), a cool air outlet (45) for discharging a cool air of a cooling compartment (28) into the storage compartment, and a cool air inlet (46) for feeding back a cool air that has cooled an interior of the storage compartment to the cooling compartment, wherein the mist atomizer condenses moisture in air flowing out from the basket in the storage compartment and atomizes as mist to the storage compartment, **characterized in that** the mist atomizer is arranged in the storage compartment, on a cool air flow path between the cool air outlet and the cool air inlet.

2. The refrigerator according to claim 1, wherein in the storage compartment (24) including the mist atomizer (67), the cool air outlet (45) is arranged on an upper side than the mist atomizer and the cool air inlet (46) is arranged on a lower side than the mist atomizer, a distance in an up and down direction of the cool air outlet and the mist atomizer being shorter than a distance of the cool air inlet and the mist atomizer.

3. The refrigerator according to claim 1, wherein in the storage compartment (24) including the mist atomizer (67), the mist atomizer is arranged on a center line in an up and down direction of the storage compartment or on an upper side than the center line in the up and down direction of the storage compartment.

4. The refrigerator according to claim 1, wherein in the storage compartment (24) including the mist atomizer (67), the mist atomizer is arranged in the side of the cool air inlet rather than a center in a left and right direction of the storage compartment.

## Patentansprüche

1. Kühlschrank, umfassend ein wärmedämmendes abgeteiltes Lagerfach (24), einen in dem Lagerfach angeordneten Korb (64, 65), einen Zerstäuber (67), einen Kaltluftauslass (45) zum Ableiten von Kaltluft eines Kühlfachs (28) in das Lagerfach und einen Kaltlufteinlass (46) zum Zurückführen von Kaltluft, die einen Innenraum des Lagerfachs gekühlt hat, zum Kühlfach, wobei der Zerstäuber Feuchtigkeit in vom Korb in das Lagerfach ausströmender Luft kondensiert und als Nebel zum Lagerfach versprüht, **dadurch gekennzeichnet, dass** der Zerstäuber im Lagerfach auf einem Kaltluftströmungsweg zwischen dem Kaltluftauslass und dem Kaltlufteinlass angeordnet ist.

2. Kühlschrank nach Anspruch 1, wobei in dem Lagerfach (24), das den Zerstäuber (67) umfasst, der Kaltluftauslass (45) an einer höheren Stelle als der Zerstäuber angeordnet ist und der Kaltlufteinlass (46) an einer tieferen Stelle als der Zerstäuber angeordnet ist, wobei ein Abstand in einer Aufwärts- und Abwärtsrichtung des Kaltluftauslasses und des Zerstäubers kleiner als ein Abstand des Kaltlufteinlasses und des Zerstäubers ist.

3. Kühlschrank nach Anspruch 1, wobei in dem Lagerfach (24), das den Zerstäuber (67) umfasst, der Zerstäuber auf einer Mittellinie in einer Aufwärts- und Abwärtsrichtung des Lagerfachs oder höher als die Mittellinie in der Aufwärts- und Abwärtsrichtung des Lagerfachs angeordnet ist.

4. Kühlschrank nach Anspruch 1, wobei in dem Lagerfach (24), das den Zerstäuber (67) umfasst, der Zerstäuber auf der Seite des Kaltlufteinlasses anstatt in der Mitte in einer Links- und Rechtsrichtung des Lagerfachs angeordnet ist.

## Revendications

1. Réfrigérateur comprenant un compartiment de stockage divisé isolant de la chaleur (24), un panier (64, 65) disposé dans le compartiment de stockage, un brumisateur (67), une sortie d'air frais (45) pour décharger un air frais d'un compartiment de refroidissement (28) dans le compartiment de stockage, et une entrée d'air frais (46) pour renvoyer un air frais qui a refroidi un intérieur du compartiment de stockage vers le compartiment de refroidissement, dans lequel le brumisateur condense l'humidité dans l'air s'écoulant hors du panier dans le compartiment de stockage et l'atomise sous forme de brume vers le compartiment de stockage, **caractérisé en ce que** le brumisateur est disposé dans le compartiment de stockage, sur un trajet d'écoulement d'air frais entre la sortie d'air frais et l'entrée d'air frais.

2. Réfrigérateur selon la revendication 1, dans lequel, dans le compartiment de stockage (24) incluant le brumisateur (67), la sortie d'air frais (45) est disposée sur un côté plus élevé que le brumisateur et l'entrée d'air frais (46) est disposée sur un côté plus bas que le brumisateur, une distance dans une direction vers le haut et vers le bas de la sortie d'air frais et du brumisateur étant plus courte qu'une distance de l'entrée d'air frais et du brumisateur.

3. Réfrigérateur selon la revendication 1, dans lequel, dans le compartiment de stockage (24) incluant le brumisateur (67), le brumisateur est disposé sur une ligne centrale dans une direction vers le haut et vers le bas du compartiment de stockage ou sur un côté plus élevé que la ligne centrale dans la direction vers le haut et vers le bas du compartiment de stockage.

4. Réfrigérateur selon la revendication 1, dans lequel, dans le compartiment de stockage (24) incluant le brumisateur (67), le brumisateur est disposé dans le côté de l'entrée d'air frais plutôt qu'en centre dans une direction gauche et droite du compartiment de stockage.
